# EUROPEAN PATENT APPLICATION

(11) **EP 4 495 160 A1**
(43) Date of publication of application: **22.01.2025**
(21) Application number: 23770887.0
(22) Date of filing: 16.03.2023
(51) Int. Cl.: C08G 59/50, C08G 59/32, C08J 5/04, C08J 5/24, C08L 21/00, C08L 63/00

(54) **EPOXY RESIN COMPOSITION, FIBER-REINFORCED COMPOSITE MATERIAL, AND PRODUCTION METHOD THEREFOR**

(30) Priority: 17.03.2022 JP 2022042538; 17.03.2022 JP 2022042539; 17.03.2022 JP 2022042540; 25.07.2022 JP 2022117798
(71) Applicant: Toray Industries, Inc., Tokyo 103-8666 (JP)
(72) Inventor: MATSUKAWA Ko, Nagoya-shi, Aichi 455-8502 (JP); KONISHI Daisuke, Nagoya-shi, Aichi 455-8502 (JP); HIRANO Noriyuki, Nagoya-shi, Aichi 455-8502 (JP); TSUCHIDA Hiroya, Nagoya-shi, Aichi 455-8502 (JP)
(74) Representative: Mewburn Ellis LLP
(86) International application number: PCT/JP2023/010372
(87) International publication number: WO 2023/176934

(57) **Abstract**

An object of the present invention is to provide an epoxy resin composition having excellent viscosity stability and having a high compression property and high fracture toughness at the time of wet heating, and to provide a fiber-reinforced composite material obtained by using, as a matrix resin, a cured resin obtained by curing the epoxy resin composition. An epoxy resin composition including a component [A] and a component [B] and satisfying Condition 1 and Condition 2 described below:
[A]: a tetrafunctional glycidyl amine type epoxy resin,
[B]: dimethylthiotoluenediamine,
Condition 1: in the epoxy resin composition, a content of the component [A] is 20 parts by mass or more and 80 parts by mass or less with respect to 100 parts by mass of a total epoxy resin,
Condition 2: in the epoxy resin composition, a value (E_{82/}E₂₃) obtained by dividing a flexural modulus (82°C under wet condition) by a flexural modulus (at 23°C and 50% RH) is 0.75 or more.

## Description

### TECHNICAL FIELD

The present invention relates to an epoxy resin composition preferably used in aerospace members and general industries, a fiber-reinforced composite material using the epoxy resin composition, and a method for producing the fiber-reinforced composite material.

### BACKGROUND ART

Epoxy resin compositions are widely used as matrix resins of fiber-reinforced composite materials by taking advantage of the characteristics of being excellent in high heat resistance, adhesiveness, and mechanical strength. A fiber-reinforced composite material is produced by combining and integrating a reinforcing fiber and a matrix resin, and examples of the method for producing a fiber-reinforced composite material include a method of laminating and molding a prepreg in which a reinforcing fiber and a matrix resin are impregnated in advance, and a method of injecting a matrix resin having a low viscosity into a shaped reinforcing-fiber base material and thermally curing the resin. In general, a method in which a molding material for fiber-reinforced composite material is used achieves a high mechanical property and therefore is widely used in the industrial and aircraft fields, but the method has a disadvantage that the production process, which includes preparation and shaping of a prepreg, takes time.

Demand for high productivity is recently increasing in use of structural materials of aircraft, automobiles, and the like, and there is a demand for a technique of producing a large composite material member at high speed and obtaining a fiber-reinforced composite material having a high mechanical property and high heat resistance. Therefore, there is an increasing demand for a fiber-reinforced composite material such that an injection molding method such as resin transfer molding (an RTM method) can be applied and an excellent property is exhibited.

In an injection molding method, a two-component epoxy resin composition is often used from the viewpoint of molding processability. The two-component epoxy resin composition is an epoxy resin composition that includes an epoxy main agent liquid containing an epoxy resin as a main component and a curing agent liquid containing a curing agent as a main component and is obtained by mixing the two liquids, the epoxy main agent liquid and the curing agent liquid, immediately before use. In contrast, a one-component epoxy resin composition refers to an epoxy resin composition in which all the components including a main agent and a curing agent are mixed together.

In use of a fiber-reinforced composite material in a structural material of an aircraft or the like, the property at the time of wet heating is important. A method is generally known in which a highly hydrophobic curing agent component is blended in order to enhance the property at the time of wet heating, but such a curing agent mainly contains a solid component, and the viscosity of the matrix resin tends to increase, so that the curing agent is unsuitable for an injection molding method such as an RTM method. Therefore, development of a technique has been awaited for maintaining a low viscosity in a resin injection step without impairing the property at the time of wet heating.

Patent Documents 1 and 2 describe a technique in which an epoxy resin composition containing dimethylthiotoluenediamine is used to increase the open hole compression of a fiber-reinforced composite material including the epoxy resin composition.

Patent Document 3 describes a method of suppressing an increase in the viscosity of a resin in an injection step by using an epoxy resin composition containing methylenebis(3-chloro-2,6-diethylaniline) (M-CDEA) as a curing agent.

Patent Document 4 discloses a method of reducing the water absorption coefficient of a cured epoxy resin by containing a dicyclopentadiene type epoxy resin and a trifunctional liquid epoxy resin.

Patent Document 5 discloses a method of reducing the viscosity of an epoxy resin composition by containing diethyltoluenediamine and 4,4'-methylenebis(2-isopropyl-6-methylaniline) (M-MIPA) as curing agents.

### PRIOR ART DOCUMENTS

### PATENT DOCUMENTS

Patent Document 1: International Publication No. 2019-011982
Patent Document 2: International Publication No. 2019-011774
Patent Document 3: Japanese Patent No. 5808057
Patent Document 4: Japanese Patent Laid-open Publication No. 2006-291093
Patent Document 5: Japanese Patent Laid-open Publication No. 2010-150310

### SUMMARY OF THE INVENTION

### PROBLEMS TO BE SOLVED BY THE INVENTION

The fiber-reinforced composite materials using the epoxy resin compositions described in Patent Documents 1 and 2 are excellent in open hole compression, but the elastic modulus at the time of wet heating is insufficient. The viscosity stability at the time of injection is not described.

The epoxy resin composition described in Patent Document 3 can suppress an increase in viscosity for a long time, but the viscosity of the matrix resin is high because of solid M-CDEA contained in the epoxy resin composition, and thus the epoxy resin composition is unsuitable for resin injection molding. The epoxy resin composition has also a problem of an insufficient compression strength at the time of wet heating.

The cured resin obtained using the epoxy resin composition described in Patent Document 4 has a low water absorption coefficient, but has an insufficient elastic modulus under wet heating. The viscosity stability of the epoxy resin composition is not suggested, and is not described.

The epoxy resin composition described in Patent Document 5 has a low viscosity, but the viscosity increases in a short time, and therefore the epoxy resin composition is unsuitable for injection molding of a large structural material. The epoxy resin composition has also a problem of a low elastic modulus at the time of wet heating and a low heat resistance at the time of wetting.

An object of the present invention is to provide an epoxy resin composition, a cured resin, and a fiber-reinforced composite material using the cured resin, in which the drawbacks of the prior art are improved.

### SOLUTIONS TO THE PROBLEMS

As a result of intensive studies to solve the above problems, the present inventors have found an epoxy resin composition having the following configurations, and completed the present invention. That is, the epoxy resin composition of the present invention has the following configurations.
[1] An epoxy resin composition including a component [A] and a component [B] described below:
   [A]: a tetrafunctional glycidyl amine type epoxy resin,
   [B]: dimethylthiotoluenediamine,
   the epoxy resin composition satisfying Condition 1 and Condition 2 described below:
      Condition 1: in the epoxy resin composition, a content of the component [A] is 20 parts by mass or more and 80 parts by mass or less with respect to 100 parts by mass of a total epoxy resin,
      Condition 2: in the epoxy resin composition, a value (E_{82/}E₂₃) obtained by dividing a flexural modulus (82°C under wet condition) by a flexural modulus (at 23°C and 50% RH) is 0.75 or more.
[2] The epoxy resin composition according to [1], further including a component (C) described below:
   [C]: a methylenebisaniline derivative,
   the epoxy resin composition further satisfying Condition 3 described below:
      Condition 3: Cd₁₀(110°C)/Cd₉₀(180°C) is in a range of 9.4 or more and 9.9 or less,
      wherein Cd₁₀(110°C) represents a time that the epoxy resin composition takes to reach a degree of cure of 10% at 110°C, and Cd₉₀(180°C) represents a time that the epoxy resin composition takes to reach a degree of cure of 90% at 180°C.
[3] The epoxy resin composition according to [1] or [2], further including a component (D) described below:
   [D]: diethyltoluenediamine.
[4] The epoxy resin composition according to any one of [1] to [3], wherein a cured product obtained by thermally curing the epoxy resin composition at 180°C for 2 hours has a ratio (wet Tg/dry Tg) of 0.9 or more, wherein dry Tg represents a glass transition temperature of the cured product, and wet Tg represents a glass transition temperature of the cured product after immersion in water at 98°C for 48 hours.
[5] The epoxy resin composition according to any one of [1] to [4], including a bifunctional glycidylaniline type epoxy resin as a component [E] in an amount of 10 parts by mass or more and 50 parts by mass or less with respect to 100 parts by mass of the total epoxy resin.
[6] The epoxy resin composition according to any one of [1] to [5], including at least one epoxy resin as a component [F] in an amount of 10 parts by mass or more and 50 parts by mass or less with respect to 100 parts by mass of the total epoxy resin, the at least one epoxy resin selected from the group consisting of dicyclopentadiene type epoxy resins, biphenyl type epoxy resins, and biphenyl aralkyl type epoxy resins.
[7] The epoxy resin composition according to any one of [1] to [6], including a core-shell type rubber particle as a component [G] in an amount of 1 part by mass or more and 10 parts by mass or less with respect to 100 parts by mass of the total epoxy resin.
[8] The epoxy resin composition according to any one of [1] to [7], having a value (Mh/Me) of 0.9 or more and 1.2 or less, the value (Mh/Me) obtained by dividing Mh representing a sum of moles of active hydrogen contained in the component [B] and the component [C] and/or the component [D] by Me representing a sum of moles of active groups contained in the total epoxy resin.
[9] A cured resin obtained by thermally curing the epoxy resin composition according to any one of [1] to [8].
[10] A fiber-reinforced composite material including the cured resin according to [9] and a reinforcing-fiber base material.
[11] The fiber-reinforced composite material according to [10], wherein the reinforcing-fiber base material is a carbon fiber base material.
[12] A method for producing a fiber-reinforced composite material, the method including:
   injecting the epoxy resin composition according to any one of [1] to [8] into a reinforcing-fiber base material disposed in a mold heated to 70°C or more and 190°C or less;
   impregnating the epoxy resin composition into the reinforcing-fiber base material; and
   curing the epoxy resin composition in the mold.
[13] The method for producing a fiber-reinforced composite material according to [12], wherein the reinforcing-fiber base material is a carbon fiber base material.

### EFFECTS OF THE INVENTION

According to the present invention, an epoxy resin composition can be provided that can provide a cured resin having an excellent elastic modulus in a wet heat environment. The epoxy resin composition of the present invention can exhibit the above property while maintaining a low viscosity for a long time in an injection step, and therefore can be suitably used as an epoxy resin composition suitable for production of a fiber-reinforced composite material by injection molding.

### EMBODIMENTS OF THE INVENTION

The epoxy resin composition of the present invention includes [A] a tetrafunctional glycidyl amine type epoxy resin and [B] dimethylthiotoluenediamine as essential components. The epoxy resin composition preferably further includes [C] a methylenebisaniline derivative and/or [D] diethyltoluenediamine. The epoxy resin composition of the present invention preferably further includes, as an epoxy resin, [E] a bifunctional glycidylaniline type epoxy resin and/or at least one epoxy resin as [F] selected from the group consisting of dicyclopentadiene type epoxy resins, biphenyl type epoxy resins, and phenol aralkyl type epoxy resins, and may include an epoxy resin, as [H], different from the components [A], [E], and [F]. In addition to these, [G] a core-shell type rubber particle is also preferably included. First, these constituent components will be described.

### (Component [A])

The epoxy resin composition of the present invention is required to include the component [A] at a content of 20 parts by mass or more and 80 parts by mass or less with respect to 100 parts by mass of the total epoxy resin. If the epoxy resin composition includes the component [A] in the above range, a cured resin obtained by thermally curing the epoxy resin composition exhibits high heat resistance and has a high elastic modulus under wet heating. If the amount of the component [A] blended is less than 20 parts by mass, the heat resistance of the cured resin is insufficient. If the amount of the component [A] blended is more than 80 parts by mass, the elastic modulus under wet heating of the cured resin is insufficient. The content of the component [A] is preferably 40 parts by mass or more and 60 parts by mass or less, and more preferably in the range of 40 parts by mass or more and 50 parts by mass or less with respect to 100 parts by mass of the total epoxy resin. Here, the phrase "the content is 20 parts by mass or more and 80 parts by mass or less with respect to 100 parts by mass of the total epoxy resin" means that the content is 20 parts by mass or more and 80 parts by mass or less when the amount of the total epoxy resin included in the epoxy resin composition for RTM of the present invention is regarded as 100 parts by mass (the same applies to the same expression hereinafter). Here, the total epoxy resin refers to all of the epoxy resin components included in the epoxy resin composition for RTM of the present invention. If the above range is satisfied, the heat resistance of the cured resin is not impaired and the cured resin can effectively have a high elastic modulus at the time of wet heating, so that a high compression strength at the time of wet heating is achieved in a fiber-reinforced composite material obtained by using, as a matrix resin, the cured resin obtained by curing the epoxy resin composition.

Examples of the component [A] include tetraglycidyl diaminodiphenylmethane and tetraglycidyl diaminodiphenyl sulfone.

Examples of a commercially available product of the tetraglycidyl diaminodiphenylmethane include "SUMI-EPOXY (registered trademark)" ELM-434, "SUMI-EPOXY (registered trademark)" ELM-434VL (both manufactured by SUMITOMO CHEMICAL COMPANY, LIMITED), YH434L (manufactured by NIPPON STEEL Chemical & Material CO., LTD.), "jER (registered trademark)" 604 (manufactured by Mitsubishi Chemical Corporation), "Araldite (registered trademark)" MY720, and "Araldite (registered trademark)" MY721 (both manufactured by Huntsman Japan KK).

Examples of a commercially available product of the tetraglycidyl diaminodiphenyl sulfone include TG3DAS (manufactured by Konishi Chemical Ind. Co., Ltd.).

Here, the glass transition temperature (Tg) of the cured resin in the present invention can be calculated from the scatter diagram of the storage modulus and the temperature that are obtained by performing temperature rise measurement by dynamic viscoelasticity measurement (DMA measurement). The glass transition temperature is the temperature at the intersection of the tangent line drawn in the glass region and the tangent line drawn in the glass transition region in the above-described scatter diagram.

### (Component [B])

The component [B] in the present invention is dimethylthiotoluenediamine. The cured resin obtained by using the component [B] as a curing agent of the epoxy resin can have a higher elastic modulus under wet heating than a cured resin in which the component [B] is not used. Furthermore, a cured product obtained by thermally curing the epoxy resin composition including dimethylthiotoluenediamine as a curing agent has high fracture toughness. Therefore, a fiber-reinforced composite material obtained by using the epoxy resin composition as a matrix resin has higher impact resistance than a fiber-reinforced composite material obtained by using, as a matrix resin, an epoxy resin composition not including dimethylthiotoluenediamine as a curing agent. Furthermore, the epoxy resin composition including dimethylthiotoluenediamine as a curing agent exhibits viscosity stability for a long time.

Here, the viscosity stability of the epoxy resin composition of the present invention can be evaluated, for example, from the temporal change in the viscosity at a constant temperature (thickening rate) using a dynamic viscoelasticity measurement device. In order to maintain the impregnating property into a reinforcing-fiber base material for a long time, the epoxy resin composition preferably has a thickening rate after holding at 110°C for 180 minutes of 3 times or less, and more preferably 2 times or less based on the viscosity at the start of measurement. If the thickening rate is within the above range, the epoxy resin composition exhibits an excellent injection property when a large structural material or structural material having a complicated shape is molded in an RTM method.

Examples of a commercially available product of the dimethylthiotoluenediamine include "Ethacure (registered trademark)" 300 (manufactured by Albemarle Corporation) and "HARTCURE (registered trademark)" 30 (manufactured by KUMIAI CHEMICAL INDUSTRY CO., LTD.).

The epoxy resin composition of the present invention has a characteristic such that a cured resin obtained by curing the epoxy resin composition at 180°C for 120 minutes has a value obtained by dividing the flexural modulus (82°C under wet condition) by the flexural modulus (at 23°C and 50% RH), that is, E₈₂/E₂₃ of 0.75 or more. If E₈₂/E₂₃ is less than 0.75, when a fiber-reinforced composite material obtained by using, as a matrix resin, a cured resin obtained by curing the epoxy resin composition is used at a high temperature and a high humidity, the mechanical property deteriorates. In particular, the compression strength at the time of wet heating deteriorates, and therefore application to a structural material is limited.

In the cured resin obtained by curing the epoxy resin composition of the present invention, the flexural modulus (82°C under wet condition) is not higher than the flexural modulus (at 23°C and 50% RH), and therefore the upper limit of E₈₂/E₂₃ is 1. The preferred range of E₈₂/E₂₃ is preferably 0.80 or more, and more preferably 0.85 or more, and E₈₂ is particularly preferably 3.1 GPa or more. These characteristics further improve the compression property at the time of wet heating of the fiber-reinforced composite material obtained by using, as a matrix resin, the cured resin obtained by curing the epoxy resin composition.

Here, the flexural modulus (82°C under wet condition) and the flexural modulus (at 23°C and 50% RH) can be evaluated with a 3-point bending test in accordance with JIS K7171 (1994). The flexural modulus (82°C under wet condition) can be evaluated, for example, by subjecting a cured resin immersed in boiling water for 2 days to a 3-point bending test in a thermostatic chamber set at 82°C.

### (Component [C])

The component [C] in the present invention is a methylenebisaniline derivative, and is preferably included simultaneously with the component [B]. Combination use of the component [B] and the component [C] at an appropriate ratio can enhance the elastic modulus under wet heating of the cured resin and achieve both the viscosity stability at the time of injection in molding of a fiber-reinforced composite material and the curing rate at the time of curing the fiber-reinforced composite material in a well-balanced manner. If the components [B] and [C] are used in combination, the composition of the curing agent can be kept in a liquid state, and at the time of mixing the curing agent with an epoxy resin (epoxy main agent liquid in the case of using as a two-component epoxy resin), there is no need to heat and dissolve the curing agent (curing agent liquid in the case of using as a two-component curing agent). Thus, the components [B] and [C] can be suitably used in combination for injection molding of a fiber-reinforced composite material.

Examples of the component [C] include 4,4'-methylenebis(2-isopropyl-6-methylaniline) (M-MIPA), 4,4'-methylenebis(2,6-diethylaniline) (M-DEA), methylenebis(3-chloro-2,6-diethylaniline) (M-CDEA), 4,4'-methylenebis(2,6-bis(1-methylethyl)benzeneamine) (M-DIPA), and 4,4'-diamino-3,3'-dimethyldiphenylmethane (M-MEA).

Examples of a commercially available product of the methylenebisaniline derivative include "Lonzacure (registered trademark)" M-MIPA, "Lonzacure (registered trademark)" M-DEA, "Lonzacure (registered trademark)" M-CDEA, "Lonzacure (registered trademark)" M-DIPA (all manufactured by Lonza K.K.), and "KAYAHARD (registered trademark)" A-A (manufactured by Nippon Kayaku Co., Ltd.).

As the component [C], 4,4'-methylenebis(2-isopropyl-6-methylaniline) (M-MIPA) is preferably used, and the cured resin can have a higher elastic modulus under wet heating.

In the epoxy resin composition of the present invention, the ratio of the time (Cd₁₀(110°C)) representing a time that the epoxy resin composition held at 110°C takes to reach a degree of cure of 10% to the time (Cd₉₀(180°C)) representing a time that the epoxy resin composition held at 180°C takes to reach a degree of cure of 90%, that is, Cd₁₀(110°C)/Cd₉₀(180°C) is preferably in the range of 9.4 or more and 9.9 or less. If Cd₁₀(110°C)/Cd₉₀(180°C) is 9.4 or more, the viscosity of the epoxy resin composition can be maintained low during impregnation in injection molding of a fiber-reinforced composite material, and impregnation can be sufficiently performed in molding of a large member or a member having a complicated shape. If Cd₁₀(110°C)/Cd₉₀(180°C) is 9.9 or less, the curing time becomes short, the production cycle of a fiber-reinforced composite material becomes short, the curing rate after injection is in an appropriate range, heat generation in the curing process can be suppressed, and the quality and the mechanical property of the fiber-reinforced composite material are good.

Here, Cd₁₀(110°C) and Cd₉₀(180°C) described above can be evaluated, for example, from dielectric analysis in accordance with ASTM E2039.

### (Component [D])

The component [D] in the present invention is diethyltoluenediamine, and is preferably included simultaneously with the component [B]. When used in combination with the component [B], the component [D] can achieve both the elastic modulus under wet heating and the heat resistance at the time of wetting of the cured resin at a higher level. These effects are unique effects that cannot be achieved by only the component [B] or the component [D]. The reason is not clear, but it is considered that the component [B] and the component [D] have similar molecular skeleton structures, and crosslinks formed by a curing reaction are homogeneously formed. If the components [B] and [D] are used in combination, the composition of the curing agent can be kept in a low-viscosity liquid state, and at the time of mixing the curing agent with an epoxy resin (epoxy main agent liquid in the case of using as a two-component epoxy resin), there is no need to heat and dissolve the curing agent (curing agent liquid in the case of using as a two-component curing agent), and the epoxy resin composition after the mixing also has a low viscosity. Thus, the components [B] and [D] can be suitably used in combination for injection molding of a fiber-reinforced composite material.

As a commercially available product of the component [D], "jERcure (registered trademark)" WA (manufactured by Mitsubishi Chemical Corporation), "Ethacure (registered trademark)" 100 (manufactured by Albemarle Corporation), "HARTCURE (registered trademark)" 10 (manufactured by KUMIAI CHEMICAL INDUSTRY CO., LTD.), "Lonzacure (registered trademark)" DETDA80 (manufactured by Lonza K.K.), and the like can be used.

The epoxy resin composition of the present invention has a characteristic such that the heat resistance at the time of wetting of the cured resin obtained by curing the epoxy resin composition at 180°C for 120 minutes (wet Tg) is less likely to decrease than the heat resistance at the time of drying (dry Tg). In the case of application as a structural material typified by a structural material for an aircraft, a smaller decrease in wet Tg is more preferable. As an index of a decrease in wet Tg, the decrease rate can be expressed with the ratio of wet Tg to dry Tg (wet Tg/dry Tg), and wet Tg/dry Tg is preferably 0.9 or more, and more preferably 0.93 or more. Wet Tg/dry Tg is 1 or less due to its nature. Wet Tg can be evaluated, for example, by DMA measurement with a dynamic viscoelasticity measurement device as described above using a test piece obtained by immersing a cured resin in boiling water for 48 hours.

### (Component [E])

The epoxy resin composition of the present invention preferably includes a bifunctional glycidylaniline type epoxy resin as a component [E] in an amount of 10 parts by mass or more and 50 parts by mass or less, and more preferably 20 parts by mass or more and 40 parts by mass or less with respect to 100 parts by mass of the total epoxy resin. If the component [E] is included within the above range, the heat resistance of the cured resin is not impaired and the elastic modulus can be enhanced.

The component [E] is diglycidyl aniline or its derivative, and commercially available products can be used such as GAN (N,N-diglycidyl aniline), GOT (N,N-diglycidyl-o-toluidine) (both manufactured by Nippon Kayaku Co., Ltd.), and "TOREP (registered trademark)" A-204E (diglycidyl-p-phenoxyaniline) (manufactured by Toray Fine Chemicals Co., Ltd.).

As the component [E], diglycidyl-p-phenoxyaniline is particularly preferably used because the heat resistance of the cured resin is not impaired and the elastic modulus under wet heating can be further enhanced.

### (Component [F])

In the present invention, the epoxy resin composition preferably includes at least one epoxy resin as a component [F] selected from the group consisting of dicyclopentadiene type epoxy resins, biphenyl type epoxy resins, and biphenyl aralkyl type epoxy resins, in an amount of 10 parts by mass or more and 50 parts by mass or less and more preferably 20 parts by mass or more and 40 parts by mass or less with respect to 100 parts by mass of the total epoxy resin. If the component [F] is included within the above range, the water absorption coefficient of the cured resin can be reduced, so that the elastic modulus under wet heating can be enhanced.

An epoxy resin having a skeleton that can be classified as a dicyclopentadiene type epoxy resin, a biphenyl type epoxy resin, or a biphenyl aralkyl type epoxy resin usable as the component [F] and, at the same time, can correspond to the component [A] or the component [E] is treated as the component [A] or the component [E].

A dicyclopentadiene type epoxy resin is particularly preferably used as the component [F]. In addition to the effect of reducing the water absorption coefficient of the cured resin, the fracture toughness of the cured resin can be enhanced. Combination use of the component [B] and the component [F] further enhances the fracture toughness.

Examples of a commercially available product of the dicyclopentadiene type epoxy resin as the component [F] include "EPICLON (registered trademark)" HP-7200L, "EPICLON (registered trademark)" HP-7200, "EPICLON (registered trademark)" HP-7200H, and "EPICLON (registered trademark)" HP-7200HH (all manufactured by DIC Corporation). Examples of a commercially available product of the biphenyl type epoxy resin include "jER (registered trademark)" YX-4000 (manufactured by Mitsubishi Chemical Corporation). Examples of a commercially available product of the biphenyl aralkyl type epoxy resin include NC-3000H, NC-3000, and NC-3000L (all manufactured by Nippon Kayaku Co., Ltd.).

### (Component [G])

The epoxy resin composition of the present invention preferably includes a core-shell type rubber particle as a component [G] in an amount of 1 part by mass or more and 10 parts by mass or less, and more preferably in the range of 3 parts by mass or more and 6 parts by mass or less with respect to 100 parts by mass of the total epoxy resin. If the component [G] is included in the above range, at the time of curing the epoxy resin composition of the present invention, the elastic modulus of the obtained cured product is not impaired, and the cured product can have a higher fracture toughness. Therefore, if the epoxy resin composition of the present invention is used as a matrix resin, a fiber-reinforced composite material can be obtained that is more excellent in a compression property and impact resistance.

Examples of a usable commercially available product of the component [G] include "Kane Ace (registered trademark)" MX-125, "Kane Ace (registered trademark)" MX-150, "Kane Ace (registered trademark)" MX-154, "Kane Ace (registered trademark)" MX-257, "Kane Ace (registered trademark)" MX-267, "Kane Ace (registered trademark)" MX-414, "Kane Ace (registered trademark)" MX-416, "Kane Ace (registered trademark)" MX-451 (all manufactured by KANEKA CORPORATION), "PARALOID (registered trademark)" EXL-2655, and "PARALOID (registered trademark)" EXL-2668 (both manufactured by Dow Chemical Company).

The resin toughness value of the cured resin of the present invention can be evaluated, for example, from the K1c value obtained from the SENB test described in ASTM D5045-99.

In the present invention, the epoxy resin composition preferably has a value (Mh/Me), which is the value obtained by dividing Mh representing a sum of moles of active hydrogen contained in the component [B] and the component [C] and/or the component [D] by Me representing a sum of moles of active epoxy groups in 100 parts by mass of the total epoxy resin, in the range of 0.9 or more and 1.2 or less. If the value (Mh/Me) is within the above range, a reaction between the epoxy resin and the curing agent occur efficiently to reduce the water absorption coefficient, so that the cured resin has a high elastic modulus under wet heating, and a fiber-reinforced composite material is obtained that exhibits a higher compression property at the time of wet heating. In addition, the heat resistance after wetting is also excellent, and therefore the fiber-reinforced composite material is suitably used for a structural material.

The moles of active epoxy groups in 100 parts by mass of the total epoxy resin (Me) is the sum of moles of epoxy resin active groups, and is represented by the following formula. Me = (mass of epoxy resin A/epoxy equivalent weight of epoxy resin A) + (mass of epoxy resin B/epoxy equivalent weight of epoxy resin B) + ... + (mass of epoxy resin W/epoxy equivalent weight of epoxy resin W)

The sum of moles of active hydrogen in the component [B] and the component [C] and/or the component [D] (Mh) is determined by dividing the mass of the aromatic amine compound by the active hydrogen equivalent weight of the aromatic amine compound, and is represented by the following formula. Mh = mass of component [B]/active hydrogen equivalent weight of component [B] + mass of component [C]/active hydrogen equivalent weight of component [C] + mass of component [D]/active hydrogen equivalent weight of component [D].

In the epoxy resin composition used in the present invention, an epoxy resin different from the components [A], [E], [F] may be used as a component [H] as long as an effect of the present invention is not lost. The component [H] is sometimes also referred to as another epoxy resin.

Examples of the component [H] include bisphenol A type epoxy resins, bisphenol F type epoxy resins, phenol novolac type epoxy resins, triglycidyl aminophenol type epoxy resins, and naphthalene type epoxy resins. These epoxy resins may be used singly, or in combination of two or more kinds thereof.

In the naphthalene type epoxy resins, an epoxy resin that can simultaneously correspond to the component [A] or the component [E] is treated as the component [A] or the component [E].

Examples of commercially available products of the bisphenol A type epoxy resins include "jER (registered trademark)" 828 and "jER (registered trademark)" 825 (both manufactured by Mitsubishi Chemical Corporation).

Examples of commercially available products of the bisphenol F type epoxy resins include "EPICLON (registered trademark)" 830, "EPICLON (registered trademark)" 807 (both manufactured by DIC Corporation), and "jER (registered trademark)" 806 (manufactured by Mitsubishi Chemical Corporation).

Examples of commercially available products of the phenol novolac type epoxy resins include "jER (registered trademark)" 152, "jER (registered trademark)" 154, and "jER (registered trademark)" 180S (all manufactured by Mitsubishi Chemical Corporation).

Examples of the triglycidyl aminophenol type epoxy resins include "SUMI-EPOXY (registered trademark)" ELM-100, "SUMI-EPOXY (registered trademark)" ELM-120 (both manufactured by Sumitomo Chemical Industry Company Limited), "Araldite (registered trademark)" MY0500, "Araldite (registered trademark)" MY0510, "Araldite (registered trademark)" MY0600 (all manufactured by Huntsman Advanced Materials LLC.), and "jER (registered trademark)" 630 (manufactured by Mitsubishi Chemical Corporation).

Examples of commercially available products of the naphthalene type epoxy resins include "EPICLON (registered trademark)" HP-4770 and "EPICLON (registered trademark)" HP-4700 (both manufactured by DIC Corporation).

The epoxy resin composition of the present invention may be prepared by kneading using a machine such as a kneader, a planetary mixer, a triple roll mil, or a twin screw extruder, or by mixing by hand using a beaker and a spatula, or the like as long as uniform kneading is possible.

The cured resin obtained by thermally curing the epoxy resin composition of the present invention is preferable because the elastic modulus under a wet heat environment is excellent.

From such a characteristic, the fiber-reinforced composite material including the cured resin of the present invention and a reinforcing-fiber base material is preferable because the compression strength under a wet heat environment is excellent.

The epoxy resin composition of the present invention can be used as a fiber-reinforced composite material in which the epoxy resin composition and a reinforcing-fiber base material are combined and integrated. The epoxy resin composition prepared with the above-described method and a reinforcing-fiber base material are combined and integrated, and thermally cured, and thus a fiber-reinforced composite material can be obtained in which the cured product of the epoxy resin composition of the present invention is used as a matrix resin. The method of combining and integrating the epoxy resin composition and a reinforcing-fiber base material is not particularly limited, and examples of the method include an RTM method, a liquid composite molding method, a filament winding method, a hand lay-up method, a pultrusion method, and a prepreg molding method.

The epoxy resin composition of the present invention exhibits the viscosity stability at a relatively high temperature for a long time and has an excellent property of impregnation into a reinforcing-fiber base material, and therefore is particularly suitably used in an RTM method. The RTM method is a method in which a reinforcing-fiber base material or a preform is placed in a mold, a liquid matrix resin is injected into the mold, impregnated into the reinforcing fiber, and then heated to cure the epoxy resin composition, and thus a fiber-reinforced composite material as a molded article is obtained.

In the method for producing a fiber-reinforced composite material using the epoxy resin composition of the present invention, the temperature at the time of injecting the matrix resin is not particularly limited, and it is preferable that the epoxy resin composition of the present invention be injected and impregnated into a reinforcing-fiber base material disposed in a mold heated to 70°C to 190°C in advance, and cured in the mold. The heating of the mold reduces the viscosity of the epoxy resin composition to shorten the injection time, resulting in excellent mass productivity. The thermal curing temperature is not required to be the same as the temperature at the time of injection, and the temperature may be appropriately raised to shorten the time required for thermal curing.

In the present invention, as the mold used in the RTM method, a closed mold including a rigid material may be used, and an open mold including a rigid material and a flexible film (bag) may also be used. In the latter case, a reinforcing-fiber base material can be placed between an open mold including a rigid material and a flexible film. As the rigid material, various existing materials are used such as metals such as steel and aluminum, fiber-reinforced plastic (FRP), wood, and gypsum. As the material of the flexible film, polyamides, polyimides, polyesters, fluororesins, silicone resins, and the like are used.

The reinforcing fiber used in the reinforcing-fiber base material used in the fiber-reinforced composite material of the present invention is not particularly limited, and examples of the usable reinforcing fiber include glass fibers, carbon fibers, aramid fibers, boron fibers, alumina fibers, and silicon carbide fibers. Two or more kinds of these fibers may be mixed and used. From the viewpoint of obtaining a lightweight and highly rigid fiber-reinforced composite material, the reinforcing-fiber base material is preferably a carbon fiber base material.

The fiber-reinforced composite material of the present invention is excellent in a mechanical property, compression strength at the time of wet heating, and impact resistance, and therefore can be preferably used in many structural materials such as aircraft members such as fuselages, main wings, tail wings, moving wings, fairings, cowls, doors, seats, and interior materials, spacecraft members such as motor cases and main wings, artificial satellite members such as body structures and antennas, automobile members such as outer plates, chassis, aerodynamic members, and seats, railway vehicle members such as body structures and seats, and ship members such as hulls and seats.

### EXAMPLES

Hereinafter, the present invention will be described more specifically with reference to Examples, but the present invention is not limited to the description in Examples.

The constituent components used in Examples and the evaluation methods are as follows. In the evaluation, in a case where the number of measurement samples is not particularly described, the evaluation was performed at n = 1.

### <Materials used>

(1) Component [A]: Tetrafunctional glycidyl amine type epoxy resin
   [A]-1 "SUMI-EPOXY (registered trademark)" ELM-434VL (manufactured by SUMITOMO CHEMICAL COMPANY, LIMITED, epoxy equivalent weight: 115 g/eq),
   [A]-2 "Araldite (registered trademark)" MY721 (manufactured by Huntsman Japan KK., epoxy equivalent weight: 115 g/eq).
(2) Component [B]: Dimethylthiotoluenediamine
   "Ethacure" 300 (manufactured by Albemarle Corporation, active hydrogen equivalent weight: 54 g/eq).
(3) Component [C]: Methylenebisaniline derivative
   [C]-1: "Lonzacure (registered trademark)" M-MIPA (manufactured by Lonza K.K., active hydrogen equivalent weight: 78 g/eq),
   [C]-2: "Lonzacure (registered trademark)" M-DEA (manufactured by Lonza K.K., active hydrogen equivalent weight: 78 g/eq),
   [C]-3: "Lonzacure (registered trademark)" M-CDEA (manufactured by Lonza K.K., active hydrogen equivalent weight: 95 g/eq),
   [C]-4: "KAYAHARD (registered trademark)" A-A (manufactured by Nippon Kayaku Co., Ltd., active hydrogen equivalent weight: 57 g/eq).
(4) Component [D]: Diethyltoluenediamine
   "jERcure (registered trademark)" WA (manufactured by Mitsubishi Chemical Corporation, active hydrogen equivalent weight: 45 g/eq).
(5) Component [E]: Bifunctional glycidylaniline type epoxy resin
   [E]-1 GAN (manufactured by Nippon Kayaku Co., Ltd., epoxy equivalent weight: 125 g/eq),
   [E]-2 "TOREP (registered trademark)" A-204E (manufactured by Toray Fine Chemicals Co., Ltd., epoxy equivalent weight: 162 g/eq).
(6) At least one epoxy resin selected from the group consisting of dicyclopentadiene type epoxy resins, biphenyl type epoxy resins, and biphenyl aralkyl type epoxy resins
(6-1) Component [F]: Dicyclopentadiene type epoxy resin
   [F]-1 "EPICLON (registered trademark)" HP-7200L (manufactured by DIC Corporation, epoxy equivalent weight: 246 g/eq),
   [F]-2 "EPICLON (registered trademark)" HP-7200H (manufactured by DIC Corporation, epoxy equivalent weight: 278 g/eq).
(6-2) Component [F]: Biphenyl type epoxy resin
   "jER (registered trademark)" YX-4000 (manufactured by Mitsubishi Chemical Corporation, epoxy equivalent weight: 186 g/eq).
(6-3) Component [F]: Biphenyl aralkyl type epoxy resin
   NC-3000L (manufactured by Nippon Kayaku Co., Ltd., epoxy equivalent weight: 272 g/eq).
(7) Component [G]: Core-shell type rubber particle
   "Kane Ace (registered trademark)" MX-416 (mixture of 75 mass% of glycidyl amine type epoxy resin (corresponding to component [A]) and 25 mass% of butadiene-based core-shell type rubber particle (corresponding to component [G])) (all manufactured by KANEKA CORPORATION).
(8) Component [H]: Another epoxy resin
   [H]-1 "jER (registered trademark)" 828 (manufactured by Mitsubishi Chemical Corporation, epoxy equivalent weight: 189 g/eq),
   [H]-2 "EPICLON (registered trademark)" 830 (manufactured by DIC Corporation, epoxy equivalent weight: 171 g/eq),
   [H]-3 "jER (registered trademark)" 630 (manufactured by Mitsubishi Chemical Corporation, epoxy equivalent weight: 98 g/eq),
   [H]-4 "Araldite (registered trademark)" MY0600 (manufactured by Huntsman Japan KK., epoxy equivalent weight: 118 g/eq),
   [H]-5 "EPICLON (registered trademark)" HP-4770 (manufactured by DIC Corporation, epoxy equivalent weight: 204 g/eq).

### <Method of Preparing Epoxy Resin Composition>

Predetermined amounts of components other than a component [B] dimethylthiotoluenediamine, a component [C] a methylenebisaniline derivative, and a component [D] diethyltoluenediamine were put into a stainless steel beaker, heated to a temperature of 60 to 150°C, and appropriately kneaded until the components were compatible to obtain an epoxy main agent liquid. The components [B], [C], and [D] were added into another container, and heated as necessary to be compatible, and thus a curing agent liquid was obtained. Predetermined amounts of the epoxy main agent liquid and the curing agent liquid were mixed and kneaded with a planetary mixer for 3 minutes to obtain an epoxy resin composition. The epoxy resin composition is as shown in Tables 1 to 10.

### <Method of Preparing Fiber-Reinforced Composite Material>

### (1) Preparation of Reinforcing-Fiber Base Material with Nonwoven Fabric

A nonwoven fabric (fiber areal weight: 6 g/m²) including polyamide 12 was attached to one surface of a plain woven fabric (fiber areal weight: 285 g/m²) including a carbon fiber "Torayca (registered trademark)" T700G-12K-31E as a reinforcing fiber. Then, the nonwoven fabric was fused using a far-infrared heater to obtain a reinforcing-fiber base material with a nonwoven fabric in which the nonwoven fabric is provided on one surface of the reinforcing-fiber base material.

### (2) Preparation of Fiber-Reinforced Composite Material

The reinforcing-fiber base material with a nonwoven fabric obtained in accordance with (1) Preparation of Reinforcing-Fiber Base Material with Nonwoven Fabric described above was cut into 400 mm × 400 mm so as to have fiber directions of 0°/90° and 45°/-45°. The reinforcing-fiber base material with a nonwoven fabric cut out into a mold was laminated in a configuration of [(45°/- 45°)/(0°/90°)]4s. Subsequently, the mold was heated to 110°C, and the epoxy resin composition obtained in accordance with <Method of Preparing Epoxy Resin Composition> described above was separately heated to 110°C in advance and injected into the mold. Thereafter, the temperature was raised to 180°C at a rate of 1.5 °C/min, and the epoxy resin composition was cured at 180°C for 2 hours to obtain a fiber-reinforced composite material.

### <Evaluation Methods>

### (1) Method of Evaluating Flexural Modulus (23°C, 50% RH) : E₂₃ of Cured Resin

The epoxy resin composition obtained in accordance with <Method of Preparing Epoxy Resin Composition> described above was defoamed in vacuum, and then cured at a temperature of 180°C for 2 hours in a mold set to have a thickness of 2 mm with a 2 mm thick "TEFLON (registered trademark)" spacer, and thus a cured resin having a thickness of 2 mm was obtained. From the cured resin, a test piece having a width of 10 mm and a length of 60 mm was cut out, 3-point bending was performed using an Instron universal testing machine (manufactured by Instron) with a span of 32 mm at a crosshead speed of 10 mm/min in accordance with JIS K7171 (1994) under a room temperature environment (23°C, 50% RH), and thus the flexural modulus (23°C, 50% RH) was measured. The number of samples was n = 6, and the average of these samples was adopted as the flexural modulus value.

### (2) Method of Evaluating Flexural Modulus (82°C under wet condition): E₈₂ and Water Absorption Coefficient of Cured Resin

A cured resin was obtained in the same manner as in (1) Method of Evaluating Flexural Modulus (23°C, 50% RH): E₂₃ of Cured Resin described above, and a test piece having a width of 10 mm and a length of 60 mm was cut out, and then immersed in boiling water for 48 hours. The taken-out test piece was subjected to 3-point bending using an Instron universal testing machine (manufactured by Instron) with a span of 32 mm at a crosshead speed of 10 mm/min in accordance with JIS K7171 (1994) under a high temperature environment (82°C), and thus the flexural modulus (82°C under wet condition) was measured. The mass of the test piece was measured before and after the immersion in boiling water for 48 hours, and the water absorption coefficient was measured from the difference in mass. The number of samples was n = 6, and the averages of these samples were adopted as the flexural modulus value and the like.

### (3) Method of Evaluating Glass Transition Temperature (Dry Tg) of Cured Resin

The epoxy resin composition obtained in accordance with <Method of Preparing Epoxy Resin Composition> described above was defoamed in an uncured state in vacuum, and then cured at a temperature of 180°C for 2 hours in a mold set to have a thickness of 2 mm with a 2 mm thick "TEFLON (registered trademark)" spacer, and thus a plate-shaped cured resin having a thickness of 2 mm was obtained. From the cured resin, a test piece having a width of 12.7 mm and a length of 45 mm was cut out and set on a solid twisting jig at an inter-chunk distance of 30 mm, and measurement was performed using a dynamic viscoelasticity measurement device (ARES-G2, manufactured by TA Instruments) at a temperature ramp rate of 5°C/min, a frequency of 1 Hz, and a strain amount of 0.08% in a temperature range of 40 to 260°C. At this time, in the obtained graph of the storage modulus and the temperature, the temperature at the intersection of the tangent line drawn in the glass region and the tangent line drawn in the glass transition temperature region was regarded as the glass transition temperature (dry Tg).

### (4) Method of Evaluating Glass Transition Temperature (Wet Tg) of Cured Resin

A cured resin was obtained in the same manner as in (3) Method of Evaluating Glass Transition Temperature (Dry Tg) of Cured Resin> described above, and a test piece having a width of 12.7 mm and a length of 45 mm was cut out, and then immersed in boiling water for 48 hours. The viscoelasticity was measured in the same manner as in (3) Method of Evaluating Glass Transition Temperature (Dry Tg) of Cured Resin> described above, and thus the glass transition temperature (wet Tg) was obtained.

### (5) Method of Evaluating Fracture Toughness Value of Cured Resin

The epoxy resin composition obtained in accordance with <Method of Preparing Epoxy Resin Composition> described above was defoamed in vacuum, and then cured at a temperature of 180°C for 2 hours in a mold set to have a thickness of 6 mm with a 6 mm thick "TEFLON (registered trademark)" spacer, and thus a cured resin plate having a thickness of 6 mm was obtained. The obtained cured resin plate was processed into a test piece shape described in ASTM D5045-99, and then subjected to an SENB test in accordance with ASTM D5045-99. The number of samples was n = 16, and the average of the samples was adopted as the K1c value.

### (6) Method of Evaluating Cd₁₀(110°C) and Cd₉₀(180°C) of Epoxy Resin Composition

The ion viscosity of the epoxy resin composition obtained in accordance with <Method of Preparing Epoxy Resin Composition> described above was measured using a dielectric measurement device (Cure Monitor LT-451, manufactured by Lambient Technologies LLC.). The epoxy resin composition was allowed to stand on a micro press within 5 minutes after preparation, and immediately after that, the epoxy resin composition was sandwiched and measurement was started. The ion viscosity of the epoxy resin composition takes a minimum value at the start of measurement, increases as curing proceeds, and then saturates as curing is completed. In the present invention, the cure index was calculated from the time-ion viscosity curve obtained at 110°C and 180°C in accordance with the ASTM E2039 standard, and the time when the cure index reached 10% at 110°C was determined as Cd₁₀(110°C), and the time when the cure index reached 90% at 180°C was determined as Cd₉₀(180°C).

### (7) Method of Evaluating Viscosity of Epoxy Resin Composition at 110°C

The temporal change in complex viscosity of the epoxy resin composition obtained in accordance with <Method of Preparing Epoxy Resin Composition> described above was measured using a dynamic viscoelasticity measurement device (Discover HR-2, manufactured by TA Instruments) under the conditions of a measurement mode: parallel plate (25 mmϕ, distance between gaps: 1.0 mm) and a shear speed of 100 s⁻¹ at a set temperature of 110°C. The epoxy resin composition was allowed to stand on a parallel plate within 5 minutes after preparation, and immediately after that, a gap was set and measurement was started. With η₀ representing the complex viscosity immediately after the start of measurement and η₁₈₀ representing the complex viscosity after 180 minutes, the thickening rate (η₁₈₀/η₀) was calculated. The viscosity was measured at intervals of 15 minutes until the lapse of 180 minutes, and the obtained values were arithmetically averaged to calculate an average viscosity η₀₋₁₈₀.

### (8) Method of Evaluating Open Hole Compression (23°C, 50% RH): OHC₂₃ of Fiber-Reinforced Composite Material

From the fiber-reinforced composite material obtained in accordance with <Method of Preparing Fiber-Reinforced Composite Material> described above, a rectangular piece having a length of 304.8 mm in the 0° direction and 38.1 mm in the 90° direction was cut out, and a circular hole having a diameter of 6.35 mm was bored in the piece at the center to obtain a test piece. The open hole compression (23°C, 50% RH) of this test piece was measured using an Instron universal testing machine (manufactured by Instron) in accordance with ASTM D6484 under a room temperature environment (23°C, 50% RH). The number of samples was n = 5, and the average of the samples was adopted as the OHC₂₃ value.

### (9) Method of Evaluating Open Hole Compression (82°C under wet condition): OHC₈₂ of Fiber-Reinforced Composite Material

A test piece was obtained in the same manner as in (8) Method of Evaluating Open Hole Compression (23°C, 50% RH): OHC₂₃ of Fiber-Reinforced Composite Material described above. This test piece was immersed in hot water at 72°C for 14 days, and then the open hole compression (82°C under wet condition) was measured using an Instron universal testing machine (manufactured by Instron) in accordance with ASTM D6484 under a high temperature environment (82°C). The number of samples was n = 5, and the average of the samples was adopted as the OHC₈₂ value.

### (10) Method of Evaluating Compression Strength after Impact (CAI) of Fiber-Reinforced Composite Material

From the fiber-reinforced composite material obtained in accordance with <Method of Preparing Fiber-Reinforced Composite Material> described above, a rectangular piece having a length of 150 mm in the 0° direction and 100 mm in the 90° direction was cut out to obtain a test piece. For this test piece, a falling water impact of 6.7 J/mm was applied to the center of the test piece in accordance with JIS K7089 (1996), and the compression strength after impact was measured using an Instron universal testing machine (manufactured by Instron) in accordance with JIS K7089 (1996). The number of samples was n = 5, and the average of the samples was adopted as the CAI value.

Hereinafter, the method of preparing a sample, the cured resin properties, and the measurement results of the uncured resin properties in each Example will be described.

### (Example 1)

An epoxy resin composition was prepared in accordance with <Method of Preparing Epoxy Resin Composition> described above using, as an epoxy resin, 40 parts by mass of "SUMI-EPOXY (registered trademark)" ELM-434VL (component [A]), 20 parts by mass of "TOREP" A-204E (component [E]), 25 parts by mass of "EPICLON" HP-7200L (component [F]), 20 parts by mass of "Kane Ace (registered trademark)" MX-416 (5 parts by mass of component [G] and 15 parts by mass of component [A]), and 41.6 parts by mass of "Ethacure (registered trademark)" 300 (component [B]).

The flexural property of this epoxy resin composition was acquired in accordance with (1) Method of Evaluating Flexural Modulus (23°C, 50% RH): E₂₃ of Cured Resin and (2) Method of Evaluating Flexural Modulus (82°C under wet condition): E₈₂ and Water Absorption Coefficient of Cured Resin described above. As a result, E₈₂ was 3.80 GPa, E₂₃ was 3.25 GPa, and E₈₂/E₂₃ was 0.86, showing a high elastic modulus under wet heating. The heat resistance was evaluated in accordance with (3) Method of Evaluating Glass Transition Temperature (Dry Tg) of Cured Resin and (4) Method of Evaluating Glass Transition Temperature (Wet Tg) of Cured Resin described above. As a result, dry Tg was 168°C, wet Tg was 158°C, and wet Tg/dry Tg was 0.94, showing excellent heat resistance. In addition, a very good water absorption coefficient of 2.0% was exhibited. The fracture toughness value was evaluated in accordance with (5) Method of Evaluating Fracture Toughness Value of Cured Resin described above. As a result, a good fracture toughness value of 1.2 MPa·m^{0.5} was exhibited.

The viscosity stability was evaluated in accordance with (7) Method of Evaluating Viscosity of Epoxy Resin Composition at 110°C described above. As a result, η₀ was 20 mPa·s and η₁₈₀ was 29 mPa·s, and thus a stable thickening rate (η₁₈₀/η₀) of 1.5 was exhibited.

### (Examples 2 to 17)

Epoxy resin compositions were prepared and evaluated in the same manner as in Example 1 except that the resin composition was changed as shown in Tables 1 and 2.

As a result of evaluating E₈₂ and E₂₃, wet Tg and dry Tg, the water absorption coefficient, and the fracture toughness of the epoxy resin composition of each Example, good physical properties were obtained at all levels. As a result of evaluating the viscosity stability of the epoxy resin composition of each Example at 110°C, the thickening rate (η₁₈₀/η₀) was 1.2 to 1.9, showing a suitable viscosity in injection molding.

### (Comparative Example 1)

For the resin composition shown in Table 3, an epoxy resin composition was prepared with the method described in Example IDS22 of Patent Document 2 (International Publication No. 2019-011774).

The viscosity stability of this epoxy resin composition was evaluated in accordance with (7) Method of Evaluating Viscosity of Epoxy Resin Composition at 110°C described above. As a result, η₀ was 70 mPa·s, η₁₈₀ was 88 mPa·s, and the thickening rate (η₁₈₀/η₀) was 1.3.

The flexural property of this epoxy resin composition was acquired in accordance with (1) Method of Evaluating Flexural Modulus (23°C, 50% RH): E₂₃ of Cured Resin and (2) Method of Evaluating Flexural Modulus (82°C under wet condition): E₈₂ and Water Absorption Coefficient of Cured Resin described above. As a result, E₂₃ was 3.60 GPa, E₈₂ was 2.50 GPa, and E₈₂/E₂₃ was 0.69, showing a low flexural property. The heat resistance was evaluated in accordance with (3) Method of Evaluating Glass Transition Temperature (Dry Tg) of Cured Resin and (4) Method of Evaluating Glass Transition Temperature (Wet Tg) of Cured Resin described above. As a result, dry Tg was 186°C, wet Tg was 162°C, and wet Tg/dry Tg was 0.87. Thus, the heat resistance deteriorated significantly after wetting, and an insufficient water absorption coefficient of 3.1% was exhibited.

The fracture toughness value was evaluated in accordance with (5) Method of Evaluating Fracture Toughness Value of Cured Resin described above. As a result, an insufficient fracture toughness value of 0.7 MPa·m^{0.5} was exhibited.

### (Comparative Example 2)

For the resin composition shown in Table 3, E₈₂ and E₂₃, wet Tg and dry Tg, the water absorption coefficient, and the fracture toughness value were evaluated in the same manner as in Comparative Example 1.

The epoxy resin composition included the component [C] but did not include the component [B], and as a result, E₈₂ was 2.60 GPa and E₈₂/E₂₃ was 0.68, showing a significantly low elastic modulus under wet heating.

### (Comparative Example 3)

For the resin composition shown in Table 3, E₈₂ and E₂₃, wet Tg and dry Tg, the water absorption coefficient, and the fracture toughness value were evaluated in the same manner as in Comparative Example 1.

The epoxy resin composition included the component [B], but E₈₂ was 2.80 GPa and E₈₂/E₂₃ was 0.74, showing a low elastic modulus under wet heating. The reason is considered to be because the epoxy resin composition included a large amount of the component [A] (in an amount of 100 parts by mass with respect to 100 parts by mass of the total epoxy resin).

### (Comparative Example 4)

For the resin composition shown in Table 3, E₈₂ and E₂₃, wet Tg and dry Tg, the water absorption coefficient, and the fracture toughness value were evaluated in the same manner as in Comparative Example 1.

The epoxy resin composition included the component [B], and included only a small amount of the component [A] (in an amount of 15 parts by mass with respect to 100 parts by mass of the total epoxy resin). E₈₂ was 2.30 GPa, and E₈₂/E₂₃ was 0.74 and was insufficient. Dry Tg was 155°C and wet Tg was 138°C, and thus the heat resistance significantly deteriorated.

### (Comparative Example 5)

For the resin composition shown in Table 3, E₈₂ and E₂₃, wet Tg and dry Tg, the water absorption coefficient, and the fracture toughness value were evaluated in the same manner as in Comparative Example 1.

The epoxy resin composition included the component [A] but did not include the component [B]. E₈₂ was 2.60 GPa, and E₈₂/E₂₃ was 0.72 and was insufficient. The water absorption coefficient was 2.8% and was insufficient. The thickening rate (η₁₈₀/η₀) was 16.1. Thus, the thickening rate was significantly high.

### (Comparative Example 6)

For the resin composition shown in Table 3, E₈₂ and E₂₃, wet Tg and dry Tg, the water absorption coefficient, and the fracture toughness value were evaluated in the same manner as in Comparative Example 1.

The epoxy resin composition included the component [A] but did not include the component [B]. E₈₂ was 2.70 GPa, and E₈₂/E₂₃ was 0.71 and was insufficient.

**[Table 1-1]**

| | Raw materials of epoxy resin composition | | Example 1 | Example 2 | Example 3 | Example 4 | Example 5 |
|---|---|---|---|---|---|---|---|
| Component [A]: tetrafunctional glycidyl amine type epoxy resin | "SUMI-EPOXY ^{®}" ELM-434VL | TGDDM | 40 | 40 | 40 | 40 | 40 |
| | "Araldite ^{®}" MY721 | TGDDM | | | | | |
| Component [E]: bifunctional glycidylaniline type epoxy resin | GAN | Glycidylaniline | | | | 20 | 20 |
| | "TOREP^{®}" A-204E | Diglycidyl-p-phenoxyaniline | 20 | 20 | 20 | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | 25 | 10 | 10 | | |
| | "EPICLON^{®}" HP-7200H | Dicyclopentadiene type epoxy resin | | | | 25 | 25 |
| | "jER^{®}" YX-4000 | Biphenyl type epoxy resin | | 15 | | | |
| | NC-3000L | Biphenyl aralkyl type epoxy resin | | | 15 | | |
| Component [H]: another epoxy resin | "jER^{®}" 828 | Bisphenol A type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 |
| | | Component [A]: tetrafunctional glycidyl amine type epoxy resin | 15 | 15 | 15 | 15 | 15 |
| Component [B]: dimethylthiotoluenediamine | "Ethacure^{®}" 300 | Dimethylthiotoluene diamine | 41.6 | 42.7 | 41.2 | 34.5 | 49.0 |
| Mh/Me | | | 1.10 | 1.10 | 1.10 | 0.88 | 1.25 |
| Properties of cured resin | Flexural modulus (23°C, 50% RH): E₂₃ | GPa | 3.80 | 3.90 | 3.85 | 3.95 | 4.05 |
| | Flexural modulus (under wet heating at 82°C): E₈₂ | GPa | 3.25 | 3.20 | 3.25 | 3.15 | 3.05 |
| | E₈₂/E₂₃ | | 0.86 | 0.82 | 0.84 | 0.80 | 0.75 |
| | Dry Tg | °C | 168 | 169 | 167 | 167 | 166 |
| | Wet Tg | °C | 158 | 157 | 156 | 153 | 150 |
| | Wet Tg/dry Tg | | 0.94 | 0.93 | 0.93 | 0.92 | 0.90 |
| | Water absorption coefficient | % | 2.0 | 2.2 | 1.8 | 2.4 | 2.4 |
| | K1c | MPa·m^{0.5} | 1.2 | 1.2 | 1.1 | 1.1 | 1.2 |
| Properties of epoxy resin composition (uncured resin) | Viscosity at 110°C: η₀ | mPa·s | 20 | 22 | 27 | 31 | 30 |
| | Viscosity at 110°C, after 180 min: η₁₈₀ | mPa·s | 29 | 29 | 37 | 38 | 39 |
| | Thickening rate: η₁₈₀/η₀ | | 1.5 | 1.3 | 1.4 | 1.2 | 1.3 |

**[Table 1-2]**

| | Raw materials of epoxy resin composition | | Example 6 | Example 7 | Example 8 | Example 9 |
|---|---|---|---|---|---|---|
| Component [A]: tetrafunctional glycidyl amine type epoxy resin | "SUMI-EPOXY ^{®}" ELM-434VL | TGDDM | 53 | 13 | 40 | 40 |
| | "Araldite ^{®}" MY721 | TGDDM | | | | |
| Component [E]: bifunctional glycidylaniline type epoxy resin | GAN | Glycidylaniline | 20 | 20 | | |
| | "TOREP^{®}" A-204E | Diglycidyl-p-phenoxyaniline | | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | 45 | 15 |
| | "EPICLON^{®}" HP-7200H | Dicyclopentadiene type epoxy resin | 25 | 25 | | |
| | "jER^{®}" YX-4000 | Biphenyl type epoxy resin | | | | |
| | NC-3000L | Biphenyl aralkyl type epoxy resin | | | | |
| Component [H]: another epoxy resin | "jER^{®}" 828 | Bisphenol A type epoxy resin | | | | 30 |
| Mixture of core-shell type rubber particle and epoxy resin | "Kane Ace ^{®}" MX-416 Masterbatch containing 25 mass% of core shell rubber particles | Component [G]: core-shell type rubber particle | 0.5 | 14 | 5 | 5 |
| | | Component [A]: tetrafunctional glycidyl amine type epoxy resin | 1.5 | 42 | 15 | 15 |
| Component [B]: dimethylthiotoluenediamine | "Ethacure^{®}" 300 | Dimethylthiotoluene diamine | 42.6 | 43.6 | 39.2 | 41.4 |
| Mh/Me | | | 1.10 | 1.10 | 1.10 | 1.10 |
| Properties of cured resin | Flexural modulus (23°C, 50% RH): E₂₃ | GPa | 4.10 | 3.40 | 3.40 | 3.70 |
| | Flexural modulus (under wet heating at 82°C): E₈₂ | GPa | 3.30 | 3.00 | 3.00 | 3.05 |
| | E₈₂/E₂₃ | | 0.80 | 0.88 | 0.88 | 0.82 |
| | Dry Tg | °C | 172 | 171 | 170 | 165 |
| | Wet Tg | °C | 163 | 160 | 161 | 150 |
| | Wet Tg/dry Tg | | 0.95 | 0.94 | 0.95 | 0.91 |
| | Water absorption coefficient | % | 2.2 | 2.3 | 2.1 | 2.3 |
| | K1c | MPa ·m^{0.5} | 0.9 | 1.5 | 1.2 | 1.0 |
| Properties of epoxy resin composition (uncured resin) | Viscosity at 110°C: n₀ | mPa·s | 28 | 35 | 32 | 31 |
| | Viscosity at 110°C, after 180 min: η₁₈₀ | mPa·s | 37 | 45 | 42 | 40 |
| | Thickening rate: η₁₈₀/η₀ | | 1.3 | 1.3 | 1.3 | 1.3 |

**[Table 2-1]**

| | Raw materials of epoxy resin composition | | Example 10 | Example 11 | Example 12 | Example 13 | Example 14 |
|---|---|---|---|---|---|---|---|
| Component [A]: tetrafunctional glycidyl amine type epoxy resin | "SUMI-EPOXY ^{®}" ELM-434VL | TGDDM | 50 | 15 | 50 | 15 | 45 |
| | "Araldite ^{®}" MY721 | TGDDM | | | | | |
| Component [E]: bifunctional glycidylaniline type epoxy resin | GAN | Glycidylaniline | 10 | 45 | | | |
| | "TOREP^{®}" A-204E | Diglycidyl-p-phenoxyaniline | | | 10 | 45 | 40 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | 25 | 25 | 25 | 25 | |
| Component [H]: another epoxy resin | "Araldite ^{®}" MY0600 | TGmAP | | | | | |
| | "EPICLON^{®}" HP-4770 | Naphthalene type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 |
| | | Component [A]: tetrafunctional glycidyl amine type epoxy resin | 15 | 15 | 15 | 15 | 15 |
| Component [B]: dimethylthiotoluenediamine | "Ethacure^{®}" 300 | Dimethylthiotoluene diamine | 43.5 | 42.1 | 42.4 | 37.1 | 45.3 |
| Mh/Me | | | 1.10 | 1.10 | 1.10 | 1.10 | 1.10 |
| Properties of cured resin | Flexural modulus (23°C, 50% RH): E₂₃ | GPa | 3.80 | 4.10 | 3.80 | 3.75 | 3.90 |
| | Flexural modulus (under wet heating at 82°C): E₈₂ | GPa | 3.00 | 3.20 | 3.10 | 3.20 | 3.10 |
| | E₈₂/E₂₃ | | 0.79 | 0.78 | 0.82 | 0.85 | 0.79 |
| | Dry Tg | °C | 170 | 156 | 162 | 160 | 158 |
| | Wet Tg | °C | 154 | 142 | 153 | 150 | 143 |
| | Wet Tg/dry Tg | | 0.91 | 0.91 | 0.94 | 0.94 | 0.91 |
| | Water absorption coefficient | % | 2.2 | 2.5 | 2.1 | 2.1 | 2.6 |
| | K1c | MPa·m^{0.5} | 1.0 | 1.1 | 1.0 | 1.0 | 0.9 |
| Properties of epoxy resin composition (uncured resin) | Viscosity at 110°C: η₀ | mPa·s | 33 | 22 | 40 | 36 | 30 |
| | Viscosity at 110°C, after 180 min: η₁₈₀ | mPa ·s | 40 | 41 | 47 | 42 | 37 |
| | Thickening rate: η₁₈₀/η₀ | | 1.2 | 1.9 | 1.2 | 1.2 | 1.2 |

**[Table 2-2]**

| | Raw materials of epoxy resin composition | | Example 15 | Example 16 | Example 17 |
|---|---|---|---|---|---|
| Component [A]: tetrafunctional glycidyl amine type epoxy resin | "SUMI-EPOXY ^{®}" ELM-434VL | TGDDM | 55 | 55 | 65 |
| | "Araldite ^{®}" MY721 | TGDDM | | | |
| Component [E]: bifunctional glycidylaniline type epoxy resin | GAN | Glycidylaniline | 20 | | |
| | "TOREP^{®}" A-204E | Diglycidyl-p-phenoxyaniline | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | 25 | | |
| Component [H]: another epoxy resin | "Araldite ^{®}" MY0600 | TGmAP | | | 20 |
| | "EPICLON^{®}" HP-4770 | Naphthalene type epoxy resin | | 30 | |
| Mixture of core-shell type rubber particle and epoxy resin | "Kane Ace ^{®}" MX-416 Masterbatch containing 25 mass% of core shell rubber particles | Component [G]: core-shell type rubber particle | | 5 | 5 |
| | | Component [A]: tetrafunctional glycidyl amine type epoxy resin | | 15 | 15 |
| Component [B]: dimethylthiotoluenediamine | "Ethacure^{®}" 300 | Dimethylthiotoluene diamine | 42.9 | 40.7 | 46.5 |
| Mh/Me | | | 1.10 | 1.00 | 1.00 |
| Properties of cured resin | Flexural modulus (23°C, 50% RH): E₂₃ | GPa | 4.10 | 4.10 | 4.05 |
| | Flexural modulus (under wet heating at 82°C): E₈₂ | GPa | 3.30 | 3.10 | 3.05 |
| | E₈₂/E₂₃ | | 0.80 | 0.76 | 0.75 |
| | Dry Tg | °C | 173 | 178 | 183 |
| | Wet Tg | °C | 163 | 162 | 164 |
| | Wet Tg/dry Tg | | 0.94 | 0.91 | 0.90 |
| | Water absorption coefficient | % | 2.2 | 2.4 | 2.8 |
| | K1c | MPa ·m^{0.5} | 0.9 | 0.9 | 1.0 |
| Properties of epoxy resin composition (uncured resin) | Viscosity at 110°C: η₀ | mPa ·s | 28 | 38 | 35 |
| | Viscosity at 110°C, after 180 min: η₁₈₀ | mPa ·s | 40 | 57 | 55 |
| | Thickening rate: η₁₈₀/η₀ | | 1.4 | 1.5 | 1.6 |

**[Table 3-1]**

| | Raw materials of epoxy resin composition | | Comparative Example 1 | Comparative Example 2 | Comparative Example 3 |
|---|---|---|---|---|---|
| Component [A]: tetrafunctional glycidyl amine type epoxy resin | "SUMI-EPOXY ^{®}" ELM-434VL | TGDDM | | | 85 |
| | "Araldite ^{®}" MY721 | TGDDM | 100 | | |
| Component [E]: bifunctional glycidylaniline type epoxy resin | GAN | Glycidylaniline | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | | | |
| Component [H]: another epoxy resin | "EPICLON^{®}" 830 | Bisphenol F type epoxy resin | | 17 | |
| | "jER^{®}" 630 | TGpAP | | 70 | |
| Mixture of core-shell type rubber particle and epoxy resin | "Kane Ace ^{®}" MX-416 Masterbatch containing 25 mass% of core shell rubber particles | Component [G]: core-shell type rubber particle | | 4.27 | 5 |
| | | Component [A]: tetrafunctional glycidyl amine type epoxy resin | | 12.81 | 15 |
| Component [B]: dimethylthiotoluenediamine | "Ethacure^{®}" 300 | Dimethylthiotoluene diamine | 8.1 | | 46.8 |
| Component [C]: methylenebisaniline derivative | "Lonzacure^{®}" M-MIPA | 4,4'-Methylenebis (2-isopropyl-6-methylaniline) | | | |
| | "Lonzacure^{®}" M-DEA | 4,4'-Methylenebis(2,6-diethylaniline) | 16.1 | | |
| | "Lonzacure^{®}" M-CDEA | 4,4'-Methylenebis (3-chloro-2, 6-diethylaniline) | 16.1 | 104 | |
| Component [D]: diethyltoluenediamine | "jERcure ^{®}" WA | Diethyltoluenediamine | | | |
| Mh/Me | | | 0.60 | 1.10 | 1.00 |
| Properties of cured resin | Flexural modulus (23°C, 50% RH): E₂₃ | GPa | 3.60 | 3.80 | 3.80 |
| | Flexural modulus (under wet heating at 82°C): E₈₂ | GPa | 2.50 | 2.60 | 2.80 |
| | E₈₂/E₂₃ | | 0.69 | 0.60 | 0.74 |
| | Dry Tg | °C | 186 | 175 | 205 |
| | Wet Tg | °C | 162 | 155 | 190 |
| | Wet Tg/dry Tg | | 0.87 | 0.89 | 0.93 |
| | Water absorption coefficient | % | 3.1 | 3.0 | 2.6 |
| | K1c | MPa ·m^{0.5} | 0.7 | 0.9 | 0.8 |
| Properties of epoxy resin composition (uncured resin) | Viscosity at 110°C: η₀ | mPa ·s | 70 | 50 | 30 |
| | Viscosity at 110°C, after 180 min: η₁₈₀ | mPa ·s | 88 | 70 | 40 |
| | Thickening rate: η₁₈₀/η₀ | | 1.3 | 1.4 | 1.3 |

**[Table 3-2]**

| | Raw materials of epoxy resin composition | | Comparative Example 4 | Comparative Example 5 | Comparative Example 6 |
|---|---|---|---|---|---|
| Component [A]: tetrafunctional glycidyl amine type epoxy resin | "SUMI-EPOXY ^{®}" ELM-434VL | TGDDM | | 40 | 40 |
| | "Araldite ^{®}" MY721 | TGDDM | | | |
| Component [E]: bifunctional glycidylaniline type epoxy resin | GAN | Glycidylaniline | 40 | 20 | 20 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | | 25 | 25 |
| Component [H]: another epoxy resin | "EPICLON^{®}" 830 | Bisphenol F type epoxy resin | 45 | | |
| | "jER^{®}" 630 | TGpAP | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 |
| | | Component [A]: tetrafunctional glycidyl amine type epoxy resin | 15 | 15 | 15 |
| Component [B]: dimethylthiotoluenediamine | "Ethacure^{®}" 300 | Dimethylthiotoluene diamine | 38.7 | | |
| Component [C]: methylenebisaniline derivative | "Lonzacure^{®}" M-MIPA | 4,4'-Methylenebis (2-isopropyl-6-methylaniline) | | | 56.9 |
| | "Lonzacure^{®}" M-DEA | 4,4'-Methylenebis(2,6-diethylaniline) | | | |
| | "Lonzacure^{®}" M-CDEA | 4,4'-Methylenebis(3-chloro-2, 6-diethylaniline) | | | |
| Component [D]: diethyltoluenediamine | "jERcure ^{®}" WA | Diethyltoluenediamine | | 32.6 | |
| Mh/Me | | | 1.00 | 1.00 | 1.00 |
| Properties of cured resin | Flexural modulus (23°C, 50% RH): E₂₃ | GPa | 3.10 | 3.60 | 3.80 |
| | Flexural modulus (under wet heating at 82°C): E₈₂ | GPa | 2.30 | 2.60 | 2.70 |
| | E₈₂/E₂₃ | | 0.74 | 0.72 | 0.71 |
| | Dry Tg | °C | 155 | 175 | 177 |
| | Wet Tg | °C | 138 | 156 | 163 |
| | Wet Tg/dry Tg | | 0.89 | 0.89 | 0.92 |
| | Water absorption coefficient | % | 2.7 | 2.8 | 1.9 |
| | K1c | MPa ·m^{0.5} | 0.9 | 0.9 | 0.9 |
| Properties of epoxy resin composition (uncured resin) | Viscosity at 110°C: η₀ | mPa·s | 21 | 20 | 55 |
| | Viscosity at 110°C, after 180 min: η₁₈₀ | mPa·s | 30 | 321 | 98 |
| | Thickening rate: η₁₈₀/η₀ | | 1.4 | 16.1 | 1.8 |

### (Example 18)

An epoxy resin composition was prepared in accordance with <Method of Preparing Epoxy Resin Composition> described above using, as an epoxy resin, 25 parts by mass of "SUMI-EPOXY (registered trademark)" ELM-434VL (component [A]), 30 parts by mass of "TOREP" A-204E (component [E]), 30 parts by mass of "EPICLON" HP-7200H (component [F]), 20 parts by mass of "Kane Ace (registered trademark)" MX-416 (5 parts by mass of component [G] and 15 parts by mass of component [A]), 22.8 parts by mass of "Ethacure (registered trademark)" 300 (component [B]), and 21.9 parts by mass of "Lonzacure (registered trademark)" M-MIPA (component [C]).

The flexural property of this epoxy resin composition was acquired in accordance with (1) Method of Evaluating Flexural Modulus (23°C, 50% RH): E₂₃ of Cured Resin and (2) Method of Evaluating Flexural Modulus (82°C under wet condition): E₈₂ and Water Absorption Coefficient of Cured Resin described above. As a result, E₂₃ was 3.80 GPa, E₈₂ was 3.25 GPa, and E₈₂/E₂₃ was 0.86, showing a high elastic modulus under wet heating. The heat resistance was evaluated in accordance with (3) Method of Evaluating Glass Transition Temperature (Dry Tg) of Cured Resin and (4) Method of Evaluating Glass Transition Temperature (Wet Tg) of Cured Resin described above. As a result, dry Tg was 163°C, wet Tg was 155°C, and wet Tg/dry Tg was 0.95, showing excellent heat resistance. In addition, a very good water absorption coefficient of 1.7% was exhibited. The fracture toughness value was evaluated in accordance with (5) Method of Evaluating Fracture Toughness Value of Cured Resin described above. As a result, a good fracture toughness value of 1.1 MPa·m^{0.5} was exhibited.

Cd₁₀(110°C)/Cd₉₀(180°C) was evaluated in accordance with (6) Method of Evaluating Cd₁₀(110°C) and Cd₉₀(180°C) of Epoxy Resin Composition described above. As a result, Cd₁₀(110°C)/Cd₉₀(180°C) was 9.55. The viscosity stability was evaluated in accordance with (7) Method of Evaluating Viscosity of Epoxy Resin Composition at 110°C described above. As a result, η₀ was 40 mPa·s and η₁₈₀ was 55 mPa·s, and thus a stable thickening rate (η₁₈₀/η₀) of 1.6 was exhibited.

### (Examples 19 to 38)

Epoxy resin compositions and cured resins were prepared in the same manner as in Example 18 except that the resin composition was changed as shown in Tables 4 and 5.

Cd₁₀(110°C)/Cd₉₀(180°C) of the epoxy resin composition of each Example was in the range of 9.4 to 9.9. As a result of evaluating E₈₂ and E₂₃, wet Tg and dry Tg, the water absorption coefficient, and the fracture toughness, good physical properties were obtained at all levels. As a result of evaluating the viscosity stability of the epoxy resin composition of each Example at 110°C, the thickening rate (η₁₈₀/η₀) was 1.3 to 2.0, showing a suitable viscosity in injection molding.

### (Comparative Example 1)

For the resin composition shown in Table 6, an epoxy resin composition was prepared with the method described in Example IDS22 of Patent Document 2 (International Publication No. 2019-011774).

This epoxy resin composition was evaluated in accordance with (6) Method of Evaluating Cd₁₀(110°C) and Cd₉₀(180°C) of Epoxy Resin Composition described above. As a result, Cd₁₀(110°C)/Cd₉₀(180°C) was 10.92, which was a value larger than 9.9.

### (Comparative Example 2)

For the resin composition shown in Table 6, Cd₁₀(110°C)/Cd₉₀(180°C) was evaluated in the same manner as in Comparative Example 1. As a result, Cd₁₀(110°C)/Cd₉₀(180°C) was 10.91 and thus was out of the range.

### (Comparative Example 7)

For the resin composition shown in Table 6, Cd₁₀(110°C) /Cd₉₀(180°C), the thickening rate (η₁₈₀/η₀), E₈₂ and E₂₃, wet Tg and dry Tg, the water absorption coefficient, and the fracture toughness value were evaluated in the same manner as in Comparative Example 1.

The epoxy resin composition included the components [B] and [C], but E₈₂ was 2.60 GPa and E₈₂/E₂₃ was 0.70, showing a low elastic modulus under wet heating. The reason is considered to be because the epoxy resin composition included a large amount of the component [A] (in an amount of 100 parts by mass with respect to 100 parts by mass of the total epoxy resin).

### (Comparative Example 8)

For the resin composition shown in Table 6, Cd₁₀(110°C) /Cd₉₀(180°C), the thickening rate (η₁₈₀/η₀), E₈₂ and E₂₃, wet Tg and dry Tg, the water absorption coefficient, and the fracture toughness value were evaluated in the same manner as in Comparative Example 1.

The epoxy resin composition included the component [B] and the component [C], and included only a small amount of the component [A] (in an amount of 15 parts by mass with respect to 100 parts by mass of the total epoxy resin). E₈₂ was 2.20 GPa, and E₈₂/E₂₃ was 0.73 and was insufficient. Dry Tg was 155°C and wet Tg was 138°C, and thus the heat resistance significantly deteriorated.

### (Comparative Example 5)

For the resin composition shown in Table 6, Cd₁₀(110°C)/Cd₉₀(180°C) was evaluated in the same manner as in Comparative Example 1. As a result, Cd₁₀(110°C)/Cd₉₀(180°C) was 6.67 and thus was out of the range.

### (Comparative Example 6)

For the resin composition shown in Table 6, Cd₁₀(110°C)/Cd₉₀(180°C) was evaluated in the same manner as in Comparative Example 1. As a result, Cd₁₀(110°C)/Cd₉₀(180°C) was 7.64 and thus was out of the range.

### (Comparative Example 9)

For the resin composition shown in Table 6, Cd₁₀(110°C) /Cd₉₀(180°C), the thickening rate (η_{180/}η₀), E₈₂ and E₂₃, wet Tg and dry Tg, the water absorption coefficient, and the fracture toughness value were evaluated in the same manner as in Comparative Example 1.

The epoxy resin composition included the component [A], the component [C], and the component [D], but did not include the component [B]. E₈₂ was 2.60 GPa, and E₈₂/E₂₃ was 0.72, showing an insufficient elastic modulus under wet heating.

**[Table 4-1]**

| | Raw materials of epoxy resin composition | | Example 18 | Example 19 | Example 20 | Example 21 | Example 22 | Example 23 |
|---|---|---|---|---|---|---|---|---|
| Component [A]: tetrafunctional glycidyl amine type epoxy resin | "SUMI-EPOXY ^{®}" ELM-434VL | TGDDM | 25 | 25 | 25 | 40 | 40 | 25 |
| Component [E]: bifunctional glycidylaniline type epoxy resin | GAN | Glycidylaniline | | | | | | |
| | "TOREP^{®}" A-204E | Diglycidyl-p-phenoxyaniline | 30 | 30 | 30 | 20 | 20 | 30 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | | 10 | 10 | |
| | "EPICLON^{®}" HP-7200H | Dicyclopentadiene type epoxy resin | 30 | 30 | 30 | | | 30 |
| | "jER^{®}" YX-4000 | Biphenyl type epoxy resin | | | | 15 | | |
| | NC-3000L | Biphenyl aralkyl type epoxy resin | | | | | 15 | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 | 5 |
| | | Component [A]: tetrafunctional glycidyl amine type epoxy resin | 15 | 15 | 15 | 15 | 15 | 15 |
| Component [B]: dimethylthiotoluene diamine | "Ethacure^{®}" 300 | Dimethylthiotoluene diamine | 22.8 | 27.6 | 30.8 | 31.2 | 30.1 | 31.7 |
| Component [C]: methylenebisaniline derivative | "Lonzacure^{®}" M-MIPA | 4,4' -Methylenebis (2-isopropyl-6-methylaniline) | 21.9 | 14.9 | 10.3 | 16.8 | 16.2 | |
| | "Lonzacure^{®}" M-DEA | 4,4'-Methylenebis (2,6-diethylaniline) | | | | | | 8.9 |
| | "KAYAHARD^{®}" A-A | 4,4'-Diamino-3,3'-dimethyldiphenylmethane | | | | | | |
| Mh/Me | | | 1.10 | 1.10 | 1.10 | 1.10 | 1.10 | 1.10 |
| Properties of cured resin | Flexural modulus (23°C, 50% RH): E₂₃ | GPa | 3.80 | 3.88 | 3.92 | 3.95 | 3.90 | 3.80 |
| | Flexural modulus (under wet heating at 82°C): E₈₂ | GPa | 3.25 | 3.36 | 3.40 | 3.33 | 3.40 | 3.15 |
| | E₈₂/E₂₃ | | 0.86 | 0.87 | 0.87 | 0.84 | 0.87 | 0.83 |
| | Dry Tg | °C | 163 | 162 | 160 | 165 | 161 | 164 |
| | Wet Tg | °C | 155 | 154 | 153 | 152 | 152 | 150 |
| | Wet Tg/dry Tg | | 0.95 | 0.95 | 0.96 | 0.92 | 0.94 | 0.91 |
| | Water absorption coefficient | % | 1.7 | 1.7 | 1.7 | 2.2 | 1.8 | 1.9 |
| | Klc | MPa ·m^{0.5} | 1.1 | 1.2 | 1.2 | 1.2 | 1.1 | 1.0 |
| Properties of epoxy resin composition (uncured resin) | Cd = 90% arrival time at 180°C: Cd₉₀(180°C) | MPa | 42 | 44 | 47 | 42 | 41 | 47 |
| | Cd = 10% arrival time at 110°C: Cd₁₀(110°C) | % | 401 | 422 | 465 | 398 | 402 | 446 |
| | Cd₁₀ (110°C) /Cd₉₀ (180°C) | | 9.55 | 9.59 | 9.89 | 9.48 | 9.80 | 9.49 |
| | Viscosity at 110°C: η₀ | mPa s | 40 | 37 | 35 | 22 | 27 | 37 |
| | Viscosity at 110°C, after 180 min: η₁₈₀ | mPa s | 55 | 52 | 44 | 36 | 40 | 52 |
| | Thickening rate: η₁₈₀/η₀ | | 1.6 | 1.5 | 1.5 | 1.3 | 1.4 | 1.4 |

**[Table 4-2]**

| | Raw materials of epoxy resin composition | | Example 24 | Example 25 | Example 26 | Example 27 | Example 28 |
|---|---|---|---|---|---|---|---|
| Component [A]: tetrafunctional glycidyl amine type epoxy resin | "SUMI-EPOXY ^{®}" ELM-434VL | T GDDM | 25 | 40 | 40 | 53 | 13 |
| Component [E]: bifunctional glycidylaniline type epoxy resin | GAN | Glycidylaniline | | 20 | 20 | 20 | 20 |
| | "TOREP^{®}" A-204E | Diglycidyl-p-phenoxyaniline | 30 | | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | | | |
| | "EPICLON^{®}" HP-7200H | Dicyclopentadiene type epoxy resin | 30 | 25 | 25 | 25 | 25 |
| | "jER^{®}" YX-4000 | Biphenyl type epoxy resin | | | | | |
| | NC-3000L | Biphenyl aralkyl type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 0.5 | 14 |
| | | Component [A]: tetrafunctional glycidyl amine type epoxy resin | 15 | 15 | 15 | 1.5 | 42 |
| Component [B]: dimethylthiotoluene diamine | "Ethacure^{®}" 300 | Dimethylthiotoluene diamine | 33.5 | 25.2 | 35.7 | 32.9 | 33.7 |
| Component [C]: methylenebisaniline derivative | "Lonzacure^{®}" M-MIPA | 4,4'-Methylenebis (2-isopropyl-6-methylaniline) | | 13.6 | 19.2 | 14.1 | 14.4 |
| | "Lonzacure^{®}" M-DEA | 4,4'-Methylenebis(2,6-diethylaniline) | | | | | |
| | "KAYAHARD^{®}" A-A | 4,4'-Diamino-3,3'-dimethyldiphenylmethane | 4.6 | | | | |
| Mh/Me | | | 1.10 | 0.88 | 1.25 | 1.10 | 1.10 |
| Properties of cured resin | Flexural modulus (23°C, 50% RH): E₂₃ | GPa | 4.00 | 3.90 | 4.00 | 4.00 | 3.45 |
| | Flexural modulus (under wet heating at 82°C): E₈₂ | GPa | 3.20 | 3.10 | 3.05 | 3.30 | 3.00 |
| | E₈₂/E₂₃ | | 0.80 | 0.79 | 0.76 | 0.83 | 0.87 |
| | Dry Tg | °C | 165 | 167 | 160 | 174 | 172 |
| | Wet Tg | °C | 151 | 153 | 148 | 163 | 160 |
| | Wet Tg/dry Tg | | 0.92 | 0.92 | 0.93 | 0.94 | 0.93 |
| | Water absorption coefficient | % | 2.0 | 2.3 | 2.4 | 2.2 | 2.3 |
| | K1c | MPa·m^{0.5} | 1.0 | 1.1 | 1.2 | 0.9 | 1.6 |
| Properties of epoxy resin composition (uncured resin) | Cd = 90% arrival time at 180°C: Cd₉₀(180°C) | MPa | 46 | 40 | 40 | 45 | 46 |
| | Cd = 10% arrival time at 110°C: Cd₁₀(110°C) | % | 445 | 390 | 380 | 435 | 440 |
| | Cd₁₀ (110°C)/cd₉₀ (180°C) | | 9.67 | 9.75 | 9.50 | 9.67 | 9.57 |
| | Viscosity at 110°C: η₀ | mPa ·s | 37 | 35 | 33 | 32 | 40 |
| | Viscosity at 110°C, after 180 min: η₁₈₀ | mPa ·s | 60 | 50 | 52 | 48 | 60 |
| | Thickening rate: η₁₈₀/η₀ | | 1.6 | 1.4 | 1.6 | 1.5 | 1.5 |

**[Table 5-1]**

| | Raw materials of epoxy resin composition | | Example 29 | Example 30 | Example 31 | Example 32 | Example 33 |
|---|---|---|---|---|---|---|---|
| Component [A]: tetrafunctional glycidyl amine type epoxy resin | "SUMI-EPOXY ^{®}" ELM-434VL | TGDDM | 40 | 40 | 50 | 15 | 50 |
| | "Araldite ^{®}" MY721 | | | | | | |
| Component [E]: bifunctional glycidylaniline type epoxy resin | GAN | Glycidylaniline | | | 10 | 45 | |
| | "TOREP^{®}" A-204E | Diglycidyl-p-phenoxyaniline | | | | | 10 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | 45 | 15 | | | |
| | "EPICLON^{®}" HP-7200H | Dicyclopentadiene type epoxy resin | | | 25 | 25 | 25 |
| Component [H]: another epoxy resin | "jER^{®}" 828 | Bisphenol A type epoxy resin | | 30 | | | |
| | "Araldite ^{®}" MY0600 | TGmAP | | | | | |
| | "EPICLON^{®}" HP-4770 | Naphthalene type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 |
| | | Component [A]: tetrafunctional glycidyl amine type epoxy resin | 15 | 15 | 15 | 15 | 15 |
| Component [B]: dimethylthiotoluenediamine | "Ethacure^{®}" 300 | Dimethylthiotoluene diamine | 30.3 | 31.9 | 33.6 | 32.5 | 30.9 |
| Component [C]: methylenebisaniline derivative | "Lonzacure^{®}" M-MIPA | 4,4'-Methylenebis (2-isopropyl-6-methylaniline) | 13.0 | 13.7 | 14.4 | 13.9 | 16.7 |
| | "KAYAHARD^{®}" A-A | 4,4'-Diamino-3,3'-dimethyldiphenylmethane | | | | | |
| Mh/Me | | | 1.10 | 1.10 | 1.10 | 1.10 | 1.10 |
| Properties of cured resin | Flexural modulus (23°C, 50% RH): E₂₃ | GPa | 3.50 | 3.80 | 3.75 | 4.00 | 3.75 |
| | Flexural modulus (under wet heating at 82°C): E₈₂ | GPa | 3.10 | 3.10 | 3.10 | 3.30 | 3.10 |
| | E₈₂/E₂₃ | | 0.89 | 0.82 | 0.83 | 0.83 | 0.83 |
| | Dry Tg | °C | 173 | 170 | 172 | 158 | 165 |
| | Wet Tg | °C | 161 | 152 | 157 | 144 | 153 |
| | Wet Tg/dry Tg | | 0.93 | 0.89 | 0.91 | 0.91 | 0.93 |
| | Water absorption coefficient | % | 2.2 | 2.2 | 2.2 | 2.5 | 2.1 |
| | K1c | MPa·m^{0.5} | 1.2 | 1.0 | 1.1 | 1.2 | 1.1 |
| Properties of epoxy resin composition (uncured resin) | Cd = 90% arrival time at 180°C: Cd₉₀(180°C) | MPa | 47 | 48 | 50 | 46 | 48 |
| | Cd = 10% arrival time at 110°C: Cd₁₀(110°C) | % | 446 | 460 | 485 | 450 | 470 |
| | Cd₁₀ (110°C)/cd₉₀ (180°C) | | 9.49 | 9.58 | 9.70 | 9.78 | 9.79 |
| | Viscosity at 110°C: η₀ | mPa ·s | 35 | 37 | 36 | 25 | 43 |
| | Viscosity at 110°C, after 180 min: η₁₈₀ | mPa ·s | 56 | 52 | 52 | 50 | 63 |
| | Thickening rate: η₁₈₀/η₀ | | 1.6 | 1.4 | 1.4 | 2.0 | 1.5 |

**[Table 5-2]**

| | Raw materials of epoxy resin composition | | Example 34 | Example 35 | Example 36 | Example 37 | Example 38 |
|---|---|---|---|---|---|---|---|
| Component [A]: tetrafunctional glycidyl amine type epoxy resin | "SUMI-EPOXY ^{®}" ELM-434VL | TGDDM | 15 | 45 | 55 | 55 | 65 |
| | "Araldite ^{®}" MY721 | | | | | | |
| Component [E]: bifunctional glycidylaniline type epoxy resin | GAN | Glycidylaniline | | | 20 | | |
| | "TOREP^{®}" A-204E | Diglycidyl-p-phenoxyaniline | 45 | 40 | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | | | |
| | "EPICLON^{®}" HP-7200H | Dicyclopentadiene type epoxy resin | 25 | | 25 | | |
| Component [H]: another epoxy resin | "jER^{®}" 828 | Bisphenol A type epoxy resin | | | | | |
| | "Araldite ^{®}" MY0600 | TGmAP | | | | | 20 |
| | "EPICLON^{®}" HP-4770 | Naphthalene type epoxy resin | | | | 30 | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | | 5 | 5 |
| | | Component [A]: tetrafunctional glycidyl amine type epoxy resin | 15 | 15 | | 15 | 15 |
| Component [B]: dimethylthiotoluenediamine | "Ethacure^{®}" 300 | Dimethylthiotoluene diamine | 22.3 | 27.3 | 25.8 | 36.0 | 41.2 |
| Component [C]: methylenebisaniline derivative | "Lonzacure^{®}" M-MIPA | 4,4'-Methylenebis (2-isopropyl-6-methylaniline) | 21.4 | 26.2 | 24.8 | | |
| | "KAYAHARD^{®}" A-A | 4,4'-Diamino-3,3'-dimethyldiphenylmethane | | | | 4.9 | 5.6 |
| Mh/Me | | | 1.10 | 1.10 | 1.10 | 1.00 | 1.00 |
| Properties of cured resin | Flexural modulus (23°C, 50% RH): E₂₃ | GPa | 3.70 | 3.85 | 4.00 | 4.05 | 4.05 |
| | Flexural modulus (under wet heating at 82°C): E₈₂ | GPa | 3.20 | 3.10 | 3.30 | 3.10 | 3.05 |
| | E₈₂/E₂₃ | | 0.86 | 0.81 | 0.83 | 0.77 | 0.75 |
| | Dry Tg | °C | 162 | 162 | 175 | 180 | 185 |
| | Wet Tg | °C | 153 | 145 | 165 | 162 | 159 |
| | Wet Tg/dry Tg | | 0.94 | 0.90 | 0.94 | 0.90 | 0.86 |
| | Water absorption coefficient | % | 2.1 | 2.6 | 2.2 | 2.4 | 2.8 |
| | K1c | MPa·m^{0.5} | 1.2 | 0.9 | 0.9 | 0.9 | 0.9 |
| Properties of epoxy resin composition (uncured resin) | Cd = 90% arrival time at 180°C: Cd₉₀(180°C) | MPa | 50 | 42 | 48 | 46 | 44 |
| | Cd = 10% arrival time at 110°C: Cd₁₀(110°C) | % | 480 | 400 | 456 | 440 | 416 |
| | Cd₁₀ (110°C)/cd₉₀ (180°C) | | 9.60 | 9.52 | 9.50 | 9.57 | 9.45 |
| | Viscosity at 110°C: η₀ | mPa ·s | 40 | 43 | 40 | 28 | 26 |
| | Viscosity at 110°C, after 180 min: η₁₈₀ | mPa ·s | 53 | 59 | 53 | 47 | 50 |
| | Thickening rate: η₁₈₀/η₀ | | 1.3 | 1.4 | 1.3 | 1.7 | 1.9 |

**[Table 6-1]**

| | Raw materials of epoxy resin composition | | Comparative Example 1 | Comparative Example 2 | Comparative Example 7 | Comparative Example 8 |
|---|---|---|---|---|---|---|
| Component [A]: tetrafunctional glycidyl amine type epoxy resin | "SUMI-EPOXY ^{®}" ELM-434VL | TGDDM | | | 85 | |
| | "Araldite ^{®}" MY721 | | 100 | | | |
| Component [E]: bifunctional glycidylaniline type epoxy resin | GAN | Glycidylaniline | | | | 40 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | | | | |
| Component [H]: another epoxy resin | "EPICLON^{®}" 830 | TGpAP | | 17 | | 45 |
| | "jER^{®}" 630 | Bisphenol F type epoxy resin | | 70 | | |
| Mixture of core-shell type rubber particle and epoxy resin | "Kane Ace ^{®}" MX-416 Masterbatch containing 25 mass% of core shell rubber particles | Component [G]: core-shell type rubber particle | | 4.27 | 5 | 5 |
| | | Component [A]: tetrafunctional glycidyl amine type epoxy resin | | 12.81 | 15 | 15 |
| Component [B]: dimethylthiotoluenediamine | "Ethacure^{®}" 300 | Dimethylthiotoluene diamine | 8.1 | | 41.4 | 34.3 |
| Component [C]: methylenebisaniline derivative | "Lonzacure^{®}" M-MIPA | 4,4'-Methylenebis(2-isopropyl-6-methylaniline) | | | | |
| | "Lonzacure^{®}" M-DEA | 4,4'-Methylenebis(2,6-diethylaniline) | 16.1 | | | |
| | "Lonzacure^{®}" M-CDEA | 4,4'-Methylenebis(3-chloro-2, 6-diethylaniline) | 16.1 | 104 | | |
| | "KAYAHARD^{®}" A-A | 4,4'-Diamino-3,3'-dimethyldiphenylmethane | | | 5.6 | 4.7 |
| Component [D]: diethyltoluenediamine | "jERcure ^{®}" WA | Diethyltoluenediamine | | | | |
| Mh/Me | | | 0.60 | 1.18 | 1. 00 | 1. 00 |
| Properties of cured resin | Flexural modulus (23°C, 50% RH): E₂₃ | GPa | 3.60 | 3.80 | 3.70 | 3.00 |
| | Flexural modulus (under wet heating at 82°C): E₈₂ | GPa | 2.50 | 2.60 | 2.60 | 2.20 |
| | E₈₂/E₂₃ | | 0.69 | 0.68 | 0.70 | 0.73 |
| | Dry Tg | °C | 186 | 175 | 200 | 155 |
| | Wet Tg | °C | 162 | 155 | 184 | 138 |
| | Wet Tg/dry Tg | | 0.87 | 0.89 | 0.92 | 0.89 |
| | Water absorption coefficient | | 3.1 | 3.0 | 2.6 | 2.7 |
| | Klc | MPa·m^{0.5} | 0.7 | 0.9 | 0.8 | 0.9 |
| Properties of epoxy resin composition (uncured resin) | Cd = 90% arrival time at 180°C: Cd₉₀(180°C) | MPa | 65 | 66 | 47 | 48 |
| | Cd = 10% arrival time at 110°C: Cd₁₀(110°C) | % | 710 | 720 | 450 | 465 |
| | Cd₁₀ (110°C) /Cd₉₀ (180°C) | | 10.92 | 10.91 | 9.57 | 9.69 |
| | Viscosity at 110°C: η₀ | mPa ·s | 70 | 50 | 30 | 21 |
| | Viscosity at 110°C, after 180 min: η₁₈₀ | mPa ·s | 88 | 70 | 46 | 37 |
| | Thickening rate: η₁₈₀/η₀ | | 1.3 | 1.4 | 1.5 | 1.8 |

**[Table 6-2]**

| | Raw materials of epoxy resin composition | | Comparative Example 5 | Comparative Example 6 | Comparative Example 9 |
|---|---|---|---|---|---|
| Component [A]: tetrafunctional glycidyl amine type epoxy resin | "SUMI-EPOXY ^{®}" ELM-434VL | TGDDM | 40 | 40 | 40 |
| | "Araldite ^{®}" MY721 | | | | |
| Component [E]: bifunctional glycidylaniline type epoxy resin | GAN | Glycidylaniline | 20 | 20 | 20 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | 25 | 25 | 25 |
| Component [H]: another epoxy resin | "EPICLON^{®}" 830 | TGpAP | | | |
| | "jER^{®}" 630 | Bisphenol F type epoxy resin | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 |
| | | Component [A]: tetrafunctional glycidyl amine type epoxy resin | 15 | 15 | 15 |
| Component [B]: dimethylthiotoluenediamine | "Ethacure^{®}" 300 | Dimethylthiotoluene diamine | | | |
| Component [C]: methylenebisaniline derivative | "Lonzacure^{®}" M-MIPA | 4,4'-Methylenebis(2-isopropyl-6-methylaniline) | | 56.9 | |
| | "Lonzacure^{®}" M-DEA | 4,4'-Methylenebis(2,6-diethylaniline) | | | |
| | "Lonzacure^{®}" M-CDEA | 4,4'-Methylenebis(3-chloro-2,6-diethylaniline) | | | 50.5 |
| | "KAYAHARD^{®}" A-A | 4,4'-Diamino-3,3'-dimethyldiphenylmethane | | | |
| Component [D]: diethyltoluenediamine | "jERcure ^{®}" WA | Diethyltoluenediamine | 32.6 | | 8.9 |
| Mh/Me | | | 1.00 | 1.00 | 1.00 |
| Properties of cured resin | Flexural modulus (23°C, 50% RH): E₂₃ | GPa | 3.60 | 3.00 | 3.60 |
| | Flexural modulus (under wet heating at 82°C): E₈₂ | GPa | 2.60 | 2.70 | 2.60 |
| | E₈₂/E₂₃ | | 0.72 | 0.71 | 0.72 |
| | Dry Tg | °C | 175 | 177 | 168 |
| | Wet Tg | °C | 156 | 163 | 150 |
| | Wet Tg/dry Tg | | 0.89 | 0.92 | 0.89 |
| | Water absorption coefficient | % | 2.8 | 1.9 | 2.2 |
| | K1c | MPa ·m^{0.5} | 0.9 | 0.9 | 0.8 |
| Properties of epoxy resin composition (uncured resin) | Cd = 90% arrival time at 180°C: Cd₉₀(180°C) | MPa | 15 | 42 | 50 |
| | Cd = 10% arrival time at 110°C: Cd₁₀(110°C) | % | 100 | 321 | 490 |
| | Cd₁₀ (110°C) /cd₉₀ (180°C) | | 6.67 | 7.64 | 9.80 |
| | Viscosity at 110°C: η₀ | mPa·s | 20 | 55 | 55 |
| | Viscosity at 110°C, after 180 min: η₁₈₀ | mPa·s | 321 | 98 | 98 |
| | Thickening rate: η₁₈₀/η₀ | | 16.1 | 1.8 | 1.8 |

### (Example 39)

An epoxy resin composition was prepared in accordance with <Method of Preparing Epoxy Resin Composition> described above using, as an epoxy resin, 25 parts by mass of "SUMI-EPOXY (registered trademark)" ELM-434VL (component [A]), 30 parts by mass of "TOREP" A-204E (component [E]), 30 parts by mass of "EPICLON" HP-7200H (component [F]), 20 parts by mass of "Kane Ace (registered trademark)" MX-416 (5 parts by mass of component [G] and 15 parts by mass of component [A]), 25.7 parts by mass of "Ethacure (registered trademark)" 300 (component [B]), and 7.2 parts by mass of "jERcure (registered trademark)" WA (component [D]).

The flexural property of this epoxy resin composition was acquired in accordance with (1) Method of Evaluating Flexural Modulus (23°C, 50% RH): E₂₃ of Cured Resin and (2) Method of Evaluating Flexural Modulus (82°C under wet condition): E₈₂ and Water Absorption Coefficient of Cured Resin described above. As a result, E₂₃ was 3.80 GPa, E₈₂ was 3.30 GPa, and E₈₂/E₂₃ was 0.87, showing a high elastic modulus under wet heating. The heat resistance was evaluated in accordance with (3) Method of Evaluating Glass Transition Temperature (Dry Tg) of Cured Resin and (4) Method of Evaluating Glass Transition Temperature (Wet Tg) of Cured Resin described above. As a result, dry Tg was 168°C, wet Tg was 161°C, and wet Tg/dry Tg was 0.96, showing excellent heat resistance. The rubbery state elastic modulus was 5.0 MPa. In addition, a very good water absorption coefficient of 1.8% was exhibited. The fracture toughness value was evaluated in accordance with (5) Method of Evaluating Fracture Toughness Value of Cured Resin described above. As a result, a good fracture toughness value of 1.1 MPa·m^{0.5} was exhibited.

The viscosity was evaluated in accordance with (7) Method of Evaluating Viscosity of Epoxy Resin Composition at 110°C described above. As a result, η₀ was 37 mPa·s, and the average viscosity (η₀₋₁₈₀) was 44 mPa·s.

### (Examples 40 to 57)

Epoxy resin compositions and cured resins were prepared in the same manner as in Example 39 except that the resin composition was changed as shown in Tables 7 and 8.

As a result of evaluating the elastic modulus under wet heating and the elastic modulus at room temperature, wet Tg and dry Tg, the water absorption coefficient, and the fracture toughness of the epoxy resin composition of each Example, good physical properties were obtained at all levels. As a result of evaluating the viscosity stability of the epoxy resin composition of each Example at 110°C, the average viscosity (η₀₋₁₈₀) was 23 to 51 mPa·s, showing a suitable viscosity in injection molding.

### (Comparative Example 1)

For the resin composition shown in Table 9, an epoxy resin composition was prepared with the method described in Example IDS22 of Patent Document 2 (International Publication No. 2019-011774).

This epoxy resin composition was evaluated in accordance with (7) Method of Evaluating Viscosity of Epoxy Resin Composition at 110°C described above. As a result, η₀ was 70 mPa·s, and η₀₋₁₈₀ was 77 mPa·s, showing an unsuitable viscosity in injection molding.

### (Comparative Example 2)

For the resin composition shown in Table 9, η₀₋₁₈₀ was evaluated in the same manner as in Comparative Example 1. As a result, η₀₋₁₈₀ was 58 mPa·s, showing an unsuitable viscosity for injection molding.

### (Comparative Example 10)

For the resin composition shown in Table 9, E₈₂ and E₂₃, wet Tg and dry Tg, the water absorption coefficient, and the fracture toughness value were evaluated in the same manner as in Comparative Example 1.

The epoxy resin composition included the components [B] and [D], but E₈₂ was 2.70 GPa and E₈₂/E₂₃ was 0.73, showing a low elastic modulus under wet heating. The reason is considered to be because the epoxy resin composition included a large amount of the component [A] (in an amount of 100 parts by mass with respect to 100 parts by mass of the total epoxy resin). Wet Tg/dry Tg was 0.89 and was insufficient.

### (Comparative Example 11)

For the resin composition shown in Table 9, E₈₂ and E₂₃, wet Tg and dry Tg, the water absorption coefficient, and the fracture toughness value were evaluated in the same manner as in Comparative Example 1.

The epoxy resin composition included the components [B] and [D], and included only a small amount of the component [A] (in an amount of 15 parts by mass with respect to 100 parts by mass of the total epoxy resin). E₈₂ was 2.20 GPa, and E₈₂/E₂₃ was 0.73 and was insufficient. Dry Tg was 158°C and wet Tg was 138°C, and thus the heat resistance significantly deteriorated.

### (Comparative Example 5)

For the resin composition shown in Table 9, η₀₋₁₈₀ was evaluated in the same manner as in Comparative Example 1. As a result, η₀₋₁₈₀ was 151 mPa·s and was significantly high.

### (Comparative Example 6)

For the resin composition shown in Table 9, η₀₋₁₈₀ was evaluated in the same manner as in Comparative Example 1. As a result, η₀₋₁₈₀ was 74 mPa·s, showing an unsuitable viscosity for injection molding.

**[Table 7-1]**

| | Raw materials of epoxy resin composition | | Example 39 | Example 40 | Example 41 | Example 42 | Example 43 |
|---|---|---|---|---|---|---|---|
| Component [A]: tetrafunctional glycidyl amine type epoxy resin | "SUMI-EPOXY ^{®}" ELM-434VL | TGDDM | 25 | 40 | 40 | 40 | 40 |
| | "Araldite ^{®}" MY721 | TGDDM | | | | | |
| Component [E]: bifunctional glycidylaniline type epoxy resin | GAN | Glycidylaniline | | | | | |
| | "TOREP^{®}" A-204E | Diglycidyl-p-phenoxyaniline | 30 | 20 | 20 | 20 | 20 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | 10 | 10 | 10 | 10 |
| | "EPICLON^{®}" HP-7200H | Dicyclopentadiene type epoxy resin | 30 | | | | |
| | "jER^{®}" YX-4000 | Biphenyl type epoxy resin | | 15 | | | |
| | NC-3000L | Biphenyl aralkyl type epoxy resin | | | 15 | 15 | 15 |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 |
| | | Component [A]: tetrafunctional glycidyl amine type epoxy resin | 15 | 15 | 15 | 15 | 15 |
| Component [B]: dimethylthiotoluenediamine | "Ethacure^{®}" 300 | Dimethylthiotoluene diamine | 25.7 | 29.0 | 28.0 | 17.0 | 8.1 |
| Component [D]: diethyltoluenediamine | "jERcure ^{®}" WA | Diethyltoluenediamine | 7.2 | 8.2 | 7.9 | 17.0 | 24.4 |
| Mh/Me | | | 1.00 | 1.00 | 1.00 | 1.00 | 1.00 |
| | Flexural modulus (23°C, 50% RH): E₂₃ | GPa | 3.80 | 3.85 | 3.82 | 3.75 | 3.70 |
| | Flexural modulus (under wet heating at 82°C): E₈₂ | GPa | 3.30 | 3.25 | 3.30 | 3.22 | 3.10 |
| | E₈₂/E₂₃ | | 0.87 | 0.84 | 0.86 | 0.86 | 0.84 |
| | Dry Tg | °C | 168 | 170 | 165 | 173 | 179 |
| Properties of cured resin | Wet Tg | °C | 161 | 163 | 156 | 163 | 170 |
| | Wet Tg/dry Tg | | 0.96 | 0.96 | 0.95 | 0.94 | 0.95 |
| | Rubbery state elastic modulus | MPa | 5.0 | 5.2 | 4.5 | 4.9 | 5.5 |
| | Water absorption coefficient | % | 1.8 | 2.1 | 1.8 | 1.9 | 1.8 |
| | K1c | MPa·m^{0.5} | 1.1 | 1.2 | 1.1 | 1.1 | 1.0 |
| Properties of epoxy resin composition (uncured resin) | Viscosity at 110°C: η₀ | mPa ·s | 37 | 19 | 22 | 19 | 18 |
| | Average viscosity: η₀₋₁₈₀ | mPa ·s | 44 | 23 | 27 | 42 | 51 |

**[Table 7-2]**

| | Raw materials of epoxy resin composition | | Example 44 | Example 45 | Example 46 | Example 47 | Example 48 |
|---|---|---|---|---|---|---|---|
| Component [A]: tetrafunctional glycidyl amine type epoxy resin | "SUMI-EPOXY ^{®}" ELM-434VL | TGDDM | 40 | 40 | 53 | 13 | 40 |
| | "Araldite ^{®}" MY721 | TGDDM | | | | | |
| Component [E]: bifunctional glycidylaniline type epoxy resin | GAN | Glycidylaniline | 20 | 20 | 20 | 20 | |
| | "TOREP^{®}" A-204E | Diglycidyl-p-phenoxyaniline | | | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | | | 45 |
| | "EPICLON^{®}" HP-7200H | Dicyclopentadiene type epoxy resin | 25 | 25 | 25 | 25 | |
| | "jER^{®}" YX-4000 | Biphenyl type epoxy resin | | | | | |
| | NC-3000L | Biphenyl aralkyl type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 0.5 | 14 | 5 |
| | | Component [A]: tetrafunctional glycidyl amine type epoxy resin | 15 | 15 | 1.5 | 42 | 15 |
| Component [B]: dimethylthiotoluenediamine | "Ethacure^{®}" 300 | Dimethylthiotoluene diamine | 25.8 | 36.6 | 28.9 | 29.6 | 26.6 |
| Component [D]: diethyltoluenediamine | "jERcure ^{®}" WA | Diethyltoluenediamine | 7.3 | 10.3 | 8.2 | 8.4 | 7.5 |
| Mh/Me | | | 0.88 | 1.25 | 1.00 | 1.00 | 1.00 |
| | Flexural modulus (23°C, 50% RH): E₂₃ | GPa | 3.90 | 4.00 | 3.95 | 3.45 | 3.45 |
| | Flexural modulus (under wet heating at 82°C): E₈₂ | GPa | 3.10 | 3.05 | 3.25 | 3.00 | 3.00 |
| | E₈₂/E₂₃ | | 0.79 | 0.76 | 0.82 | 0.87 | 0.87 |
| | Dry Tg | °C | 170 | 162 | 178 | 176 | 174 |
| Properties of cured resin | Wet Tg | °C | 158 | 152 | 169 | 167 | 167 |
| | Wet Tg/dry Tg | | 0.93 | 0.94 | 0.95 | 0.95 | 0.96 |
| | Rubbery state elastic modulus | MPa | 4.1 | 4.3 | 4.6 | 4.7 | 8.2 |
| | Water absorption coefficient | % | 2.3 | 2.4 | 2.2 | 2.3 | 2.2 |
| | K1c | MPa·m^{0.5} | 1.1 | 1.2 | 0.9 | 1.5 | 1.2 |
| Properties of epoxy resin composition (uncured resin) | Viscosity at 110°C: η₀ | mPa ·s | 30 | 29 | 27 | 36 | 27 |
| | Average viscosity: η₀₋₁₈₀ | mPa ·s | 38 | 40 | 38 | 48 | 40 |

**[Table 8-1]**

| | Raw materials of epoxy resin composition | | Example 49 | Example 50 | Example 51 | Example 52 | Example 53 |
|---|---|---|---|---|---|---|---|
| Component [A]: tetrafunctional glycidyl amine type epoxy resin | "SUMI-EPOXY ^{®}" ELM-434VL | TGDDM | 40 | 50 | 15 | 50 | 15 |
| | "Araldite ^{®}" MY721 | TGDDM | | | | | |
| Component [E]: bifunctional glycidylaniline type epoxy resin | GAN | Glycidylaniline | | 10 | 45 | | |
| | "TOREP^{®}" A-204E | Diglycidyl-p-phenoxyaniline | | | | 10 | 45 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | 15 | | | | |
| | "EPICLON^{®}" HP-7200H | Dicyclopentadiene type epoxy resin | | 25 | 25 | 25 | 25 |
| Component [H]: another epoxy resin | "jER^{®}" 828 | Bisphenol A type epoxy resin | 30 | | | | |
| | "Araldite ^{®}" MY0600 | TGmAP | | | | | |
| | "EPICLON^{®}" HP-4770 | Naphthalene type epoxy resin | | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 | 5 |
| | | Component [A]: tetrafunctional glycidyl amine type epoxy resin | 15 | 15 | 15 | 15 | 15 |
| Component [B]: dimethylthiotoluenediamine | "Ethacure^{®}" 300 | Dimethylthiotoluene diamine | 28.1 | 29.6 | 28.6 | 28.8 | 25.2 |
| Component [D]: diethyltoluenediamine | "jERcure ^{®}" WA | Diethyltoluenediamine | 7.9 | 8.3 | 8.1 | 8.1 | 7.1 |
| Mh/Me | | | 1.00 | 1.00 | 1.00 | 1.00 | 1.00 |
| | Flexural modulus (23°C, 50% RH): E₂₃ | GPa | 3.75 | 3.70 | 3.95 | 3.70 | 3.70 |
| | Flexural modulus (under wet heating at 82°C): E₈₂ | GPa | 3.00 | 3.05 | 3.25 | 3.05 | 3.25 |
| | E₈₂/E₂₃ | | 0.80 | 0.82 | 0.82 | 0.82 | 0.88 |
| | Dry Tg | °C | 166 | 175 | 162 | 167 | 164 |
| Properties of cured resin | Wet Tg | °C | 150 | 161 | 150 | 157 | 157 |
| | Wet Tg/dry Tg | | 0.90 | 0.92 | 0.93 | 0.94 | 0.96 |
| | Rubbery state elastic modulus | MPa | 9.0 | 5.0 | 6.0 | 5.4 | 6.3 |
| | Water absorption coefficient | % | 2.3 | 2.1 | 2.4 | 2.1 | 2.0 |
| | K1c | MPa·m^{0.5} | 1.0 | 1.1 | 1.3 | 1.0 | 1.1 |
| Properties of epoxy resin composition (uncured resin) | Viscosity at 110°C: η₀ | mPa ·s | 25 | 29 | 17 | 35 | 31 |
| | Average viscosity: η₀₋₁₈₀ | mPa ·s | 37 | 34 | 30 | 41 | 35 |

**[Table 8-2]**

| | Raw materials of epoxy resin composition | | Example 54 | Example 55 | Example 56 | Example 57 |
|---|---|---|---|---|---|---|
| Component [A]: tetrafunctional glycidyl amine type epoxy resin | "SUMI-EPOXY ^{®}" ELM-434VL | TGDDM | 45 | 55 | 55 | 65 |
| | "Araldite ^{®}" MY721 | TGDDM | | | | |
| Component [E]: bifunctional glycidylaniline type epoxy resin | GAN | Glycidylaniline | | 20 | | |
| | "TOREP^{®}" A-204E | Diglycidyl-p-phenoxyaniline | 40 | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | | | |
| | "EPICLON^{®}" HP-7200H | Dicyclopentadiene type epoxy resin | | 25 | | |
| Component [H]: another epoxy resin | "jER^{®}" 828 | Bisphenol A type epoxy resin | | | | |
| | "Araldite ^{®}" MY0600 | TGmAP | | | | 20 |
| | "EPICLON^{®}" HP-4770 | Naphthalene type epoxy resin | | | 30 | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | | 5 | 5 |
| | | Component [A]: tetrafunctional glycidyl amine type epoxy resin | 15 | | 15 | 15 |
| Component [B]: dimethylthiotoluenediamine | "Ethacure^{®}" 300 | Dimethylthiotoluene diamine | 30.8 | 29.1 | 30.4 | 34. 8 |
| Component [D]: diethyltoluenediamine | "jERcure ^{®}" WA | Diethyltoluenediamine | 8.7 | 8.2 | 8.6 | 9.8 |
| Mh/Me | | | 1.00 | 1.00 | 1.00 | 1.00 |
| | Flexural modulus (23°C, 50% RH): E₂₃ | GPa | 3.80 | 3.90 | 4.00 | 4.00 |
| | Flexural modulus (under wet heating at 82°C): E₈₂ | GPa | 3.10 | 3.30 | 3.00 | 3.00 |
| | E₈₂/E₂₃ | | 0.82 | 0.85 | 0.75 | 0.75 |
| | Dry Tg | °C | 165 | 178 | 182 | 187 |
| Properties of cured resin | Wet Tg | °C | 150 | 169 | 168 | 170 |
| | Wet Tg/dry Tg | | 0.91 | 0.95 | 0.92 | 0.91 |
| | Rubbery state elastic modulus | MPa | 4.0 | 4.7 | 8.9 | 9.5 |
| | Water absorption coefficient | % | 2.6 | 2.2 | 2.4 | 2.8 |
| | K1c | MPa ·m^{0.5} | 0.9 | 0.9 | 0.9 | 0.9 |
| Properties of epoxy resin composition (uncured resin) | Viscosity at 110°C: η₀ | mPa·s | 24 | 23 | 33 | 28 |
| | Average viscosity: η₀₋₁₈₀ | mPa·s | 32 | 27 | 45 | 38 |

**[Table 9-1]**

| | Raw materials of epoxy resin composition | | Comparative Example 1 | Comparative Example 2 | Comparative Example 10 |
|---|---|---|---|---|---|
| Component [A]: tetrafunctional glycidyl amine type epoxy resin | "SUMI-EPOXY ^{®}" ELM-434VL | TGDDM | | | 85 |
| | "Araldite ^{®}" MY721 | TGDDM | 100 | | |
| Component [E]: bifunctional glycidylaniline type epoxy resin | GAN | Glycidylaniline | | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | | | |
| Component [H]: another epoxy resin | "EPICLON^{®}" 830 | Bisphenol F type epoxy resin | | 17 | |
| | "jER^{®}" 630 | TGpAP | | 70 | |
| Mixture of core-shell type rubber particle and epoxy resin | "Kane Ace ^{®}" MX-416 Masterbatch containing 25 mass% of core shell rubber particles | Component [G]: core-shell type rubber particle | | 4.27 | 5 |
| | | Component [A]: tetrafunctional glycidyl amine type epoxy resin | | 12.81 | 15 |
| Component [B]: dimethylthiotoluenediamine | "Ethacure^{®}" 300 | Dimethylthiotoluene diamine | 8.1 | | 34.9 |
| Component [C]: methylenebisaniline derivative | "Lonzacure^{®}" M-MIPA | 4,4'-Methylenebis (2-isopropyl-6-methylaniline) | | | |
| | "Lonzacure^{®}" M-DEA | 4,4'-Methylenebis(2,6-diethylaniline) | 16.1 | | |
| | "Lonzacure^{®}" M-CDEA | 4,4'-Methylenebis (3-chloro-2,6-diethylaniline) | 16.1 | 104 | |
| Component [D]: diethyltoluenediamine | "jERcure ^{®}" WA | Diethyltoluenediamine | | | 9.9 |
| Mh/Me | | | 0.60 | 1.18 | 1.00 |
| | Flexural modulus (23°C, 50% RH): E₂₃ | GPa | 3.60 | 3.80 | 3.70 |
| | Flexural modulus (under wet heating at 82°C): E₈₂ | GPa | 2.50 | 2.60 | 2.70 |
| | E₈₂/E₂₃ | | 0.69 | 0.68 | 0.73 |
| | Dry Tg | °C | 186 | 175 | 208 |
| Properties of cured resin | Wet Tg | °C | 162 | 155 | 186 |
| | Wet Tg/dry Tg | | 0.87 | 0.89 | 0.89 |
| | Rubbery state elastic modulus | MPa | 6.0 | 10.0 | 12.0 |
| | Water absorption coefficient | % | 3.1 | 3.0 | 2.6 |
| | K1c | MPa ·m^{0.5} | 0.7 | 0.9 | 0.8 |
| Properties of epoxy resin composition (uncured resin) | Viscosity at 110°C: η₀ | mPa ·s | 70 | 50 | 30 |
| | Average viscosity: η₀₋₁₈₀ | mPa ·s | 77 | 58 | 39 |

**[Table 9-2]**

| | Raw materials of epoxy resin composition | | Comparative Example 11 | Comparative Example 5 | Comparative Example 6 |
|---|---|---|---|---|---|
| Component [A]: tetrafunctional glycidyl amine type epoxy resin | "SUMI-EPOXY ^{®}" ELM-434VL | TGDDM | | 40 | 40 |
| | "Araldite ^{®}" MY721 | TGDDM | | | |
| Component [E]: bifunctional glycidylaniline type epoxy resin | GAN | Glycidylaniline | 40 | 20 | 20 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200H | Dicyclopentadiene type epoxy resin | | 25 | 25 |
| Component [H]: another epoxy resin | "EPICLON^{®}" 830 | Bisphenol F type epoxy resin | 45 | | |
| | "jER^{®}" 630 | TGpAP | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 |
| | | Component [A]: tetrafunctional glycidyl amine type epoxy resin | 15 | 15 | 15 |
| Component [B]: dimethylthiotoluenediamine | "Ethacure^{®}" 300 | Dimethylthiotoluene diamine | 28.9 | | |
| Component [C]: methylenebisaniline derivative | "Lonzacure^{®}" M-MIPA | 4,4'-Methylenebis (2-isopropyl-6-methylaniline) | | | 56.9 |
| | "Lonzacure^{®}" M-DEA | 4,4'-Methylenebis(2,6-diethylaniline) | | | |
| | "Lonzacure^{®}" M-CDEA | 4,4'-Methylenebis (3-chloro-2,6-diethylaniline) | | | |
| Component [D]: diethyltoluenediamine | "jERcure ^{®}" WA | Diethyltoluenediamine | 8.1 | 32.6 | |
| Mh/Me | | | 1.00 | 1.00 | 1.00 |
| | Flexural modulus (23°C, 50% RH): E₂₃ | GPa | 3.00 | 3.60 | 3.80 |
| | Flexural modulus (under wet heating at 82°C): E₈₂ | GPa | 2.20 | 2.60 | 2.70 |
| | E₈₂/E₂₃ | | 0.73 | 0.72 | 0.71 |
| | Dry Tg | °C | 158 | 175 | 177 |
| Properties of cured resin | Wet Tg | °C | 138 | 156 | 163 |
| | Wet Tg/dry Tg | | 0.87 | 0.89 | 0.92 |
| | Rubbery state elastic modulus | MPa | 8.8 | 3.2 | 6.4 |
| | Water absorption coefficient | % | 2.7 | 2.8 | 1.9 |
| | K1c | MPa ·m^{0.5} | 0.9 | 0.9 | 0.9 |
| Properties of epoxy resin composition (uncured resin) | Viscosity at 110°C: η₀ | mPa ·s | 21 | 20 | 55 |
| | Average viscosity: η₀₋₁₈₀ | mPa ·s | 29 | 151 | 74 |

The properties of the fiber-reinforced composite material of each Example are as follows.

### (Example 1')

For the resin composition shown in Table 10, a fiber-reinforced composite material was prepared in accordance with <Method of Preparing Fiber-Reinforced Composite Material> described above.

The open hole compression of this fiber-reinforced composite material was acquired in accordance with (8) Method of Evaluating Open Hole Compression (23°C, 50% RH): OHC₂₃ of Fiber-Reinforced Composite Material and (9) Method of Evaluating Open Hole Compression (82°C under wet condition): OHC₈₂ of Fiber-Reinforced Composite Material described above. As a result, OHC₂₃ was 317 MPa, OHC₈₂ was 248 MPa, and OHC_{82/}OHC₂₃ was 0.78, showing an excellent compression property at the time of wet heating. In addition, the compression strength after impact was acquired in accordance with (10) Method of Evaluating Compression Strength after Impact (CAI) of Fiber-Reinforced Composite Material described above. As a result, the compression strength after impact was 310 MPa, showing excellent impact resistance.

### (Examples 3', 8', 14')

Fiber-reinforced composite materials were prepared and evaluated in the same manner as in Example 1' except that the resin composition was changed as shown in Table 10.

OHC₂₃, OHC₈₂, and CAI of the fiber-reinforced composite material of each Example were evaluated. As a result, excellent compression properties at the time of wet heating and excellent compression strength after impact were exhibited at all levels.

### (Comparative Examples 1' and 2')

Fiber-reinforced composite materials were prepared and evaluated in the same manner as in Example 1' except that the resin composition was changed as shown in Table 10.

In these fiber-reinforced composite materials, OHC₂₃ was 298 to 311 MPa, OHC₈₂ was 194 to 200 MPa, and OHC₈₂/OHC₂₃ was as low as 0.64 to 0.65. In addition, CAI was 246 to 269 MPa, and thus the impact resistance was also insufficient.

**[Table 10-1]**

| | Raw materials of epoxy resin composition | | Example 1' | Example 3' | Example 8' | Example 14' |
|---|---|---|---|---|---|---|
| Component [A]: tetrafunctional glycidyl amine type epoxy resin | "SUMI-EPOXY ^{®}" ELM-434VL | TGDDM | 40 | 40 | 40 | 45 |
| | "Araldite ^{®}" MY721 | TGDDM | | | | |
| Component [E]: bifunctional glycidylaniline type epoxy resin | "TOREP^{®}" A-204E | Diglycidyl-p-phenoxyaniline | 20 | 20 | | 40 |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | 25 | 10 | 45 | |
| | NC-3000L | Biphenyl aralkyl type epoxy resin | | 15 | | |
| Component [H]: another epoxy resin | "EPICLON^{®}" 830 | Bisphenol F type epoxy resin | | | | |
| | "jER^{®}" 630 | TGpAP | | | | |
| Mixture of core-shell type rubber particle and epoxy resin | "Kane Ace ^{®}" MX-416 Masterbatch containing 25 mass% of core shell rubber particles | Component [G]: core-shell type rubber particle | 5 | 5 | 5 | 5 |
| | | Component [A]: tetrafunctional glycidyl amine type epoxy resin | 15 | 15 | 15 | 15 |
| Component [B]: dimethylthiotoluenediamine | "Ethacure^{®}" 300 | Dimethylthiotoluene diamine | 41.6 | 41.2 | 39.2 | 45.3 |
| Component [C]: methylenebisaniline derivative | "Lonzacure^{®}" M-DEA | 4,4'-Methylenebis (2, 6-diethylaniline) | | | | |
| | "Lonzacure^{®}" M-CDEA | 4,4'-Methylenebis(3-chloro-2, 6-diethylaniline) | | | | |
| Mh/Me | | | 1.10 | 1.10 | 1.10 | 1.10 |
| Properties of epoxy resin composition (uncured resin) | OHC (23°C, 50%RH): OHC₂₃ | MPa | 317 | 324 | 288 | 331 |
| | OHC (under wet heating at 82°C): OHC₈₂ | MPa | 248 | 255 | 233 | 239 |
| | OHC₈₂/OHC₂₃ | | 0.78 | 0.79 | 0.81 | 0.72 |
| | CAI | MPa | 310 | 295 | 306 | 276 |

**[Table 10-2]**

| | Raw materials of epoxy resin composition | | Comparative Example 1' | Comparative Example 2' |
|---|---|---|---|---|
| Component [A]: tetrafunctional glycidyl amine type epoxy resin | "SUMI-EPOXY ^{®}" ELM-434VL | TGDDM | | |
| | "Araldite ^{®}" MY721 | TGDDM | 100 | |
| Component [E]: bifunctional glycidylaniline type epoxy resin | "TOREP^{®}" A-204E | Diglycidyl-p-phenoxyaniline | | |
| Component [F]: at least one epoxy resin selected from the group consisting of dicyclopentadiene type epoxy resins, biphenyl type epoxy resins, and biphenyl aralkyl type epoxy resins | "EPICLON^{®}" HP-7200L | Dicyclopentadiene type epoxy resin | | |
| | NC-3000L | Biphenyl aralkyl type epoxy resin | | |
| Component [H]: another epoxy resin | "EPICLON^{®}" 830 | Bisphenol F type epoxy resin | | 17 |
| | "jER^{®}" 630 | TGpAP | | 70 |
| Mixture of core-shell type rubber particle and epoxy resin | "Kane Ace ^{®}" MX-416 Masterbatch containing 25 mass% of core shell rubber particles | Component [G]: core-shell type rubber particle | | 4.27 |
| | | Component [A]: tetrafunctional glycidyl amine type epoxy resin | | 12.81 |
| Component [B]: dimethylthiotoluenediamine | "Ethacure^{®}" 300 | Dimethylthiotoluene diamine | 8.1 | |
| Component [C]: methylenebisaniline derivative | "Lonzacure^{®}" M-DEA | 4,4'-Methylenebis (2, 6-diethylaniline) | 16.1 | |
| | "Lonzacure^{®}" M-CDEA | 4,4'-Methylenebis(3-chloro-2,6-diethylaniline) | 16.1 | 104 |
| Mh/Me | | | 0.60 | 1.18 |
| Properties of epoxy resin composition (uncured resin) | OHC (23°C, 50%RH): OHC₂₃ | MPa | 298 | 311 |
| | OHC (under wet heating at 82°C): OHC₈₂ | MPa | 194 | 200 |
| | OHC₈₂/OHC₂₃ | | 0.65 | 0.64 |
| | CAI | MPa | 246 | 269 |

The unit of each component in Tables 1 to 10 above is parts by mass.

### INDUSTRIAL APPLICABILITY

The epoxy resin composition of the present invention can provide a cured resin having excellent viscosity stability and having high elastic modulus and high fracture toughness at the time of wet heating when used as a onecomponent epoxy resin composition, and when used as a twocomponent epoxy resin composition and after an epoxy main agent liquid and a curing agent liquid are mixed. A fiber-reinforced composite material in which a cured resin obtained by curing the epoxy resin composition is used as a matrix resin is also excellent in a compression property and impact resistance at the time of wet heating, and thus can be suitably used in aerospace members and structural members for general industries.

## Claims

1. An epoxy resin composition comprising a component [A] and a component [B] described below:
[A]: a tetrafunctional glycidyl amine type epoxy resin,
[B]: dimethylthiotoluenediamine,
the epoxy resin composition satisfying Condition 1 and Condition 2 described below:
Condition 1: in the epoxy resin composition, a content of the component [A] is 20 parts by mass or more and 80 parts by mass or less with respect to 100 parts by mass of a total epoxy resin,
Condition 2: in the epoxy resin composition, a value (E_{82/}E₂₃) obtained by dividing a flexural modulus (82°C under wet condition) by a flexural modulus (at 23°C and 50% RH) is 0.75 or more.

2. The epoxy resin composition according to claim 1, further comprising a component (C) described below:
[C]: a methylenebisaniline derivative,
the epoxy resin composition further satisfying Condition 3 described below:
Condition 3: Cd₁₀(110°C)/Cd₉₀(180°C) is in a range of 9.4 or more and 9.9 or less,
wherein Cd₁₀(110°C) represents a time that the epoxy resin composition takes to reach a degree of cure of 10% at 110°C, and Cd₉₀(180°C) represents a time that the epoxy resin composition takes to reach a degree of cure of 90% at 180°C.

3. The epoxy resin composition according to claim 1, further comprising a component (D) described below:
[D]: diethyltoluenediamine.

4. The epoxy resin composition according to claim 1, wherein a cured product obtained by thermally curing the epoxy resin composition at 180°C for 2 hours has a ratio (wet Tg/dry Tg) of 0.9 or more, wherein dry Tg represents a glass transition temperature of the cured product, and wet Tg represents a glass transition temperature of the cured product after immersion in water at 98°C for 48 hours.

5. The epoxy resin composition according to claim 1, comprising a bifunctional glycidylaniline type epoxy resin as a component [E] in an amount of 10 parts by mass or more and 50 parts by mass or less with respect to 100 parts by mass of the total epoxy resin.

6. The epoxy resin composition according to claim 1 or 5, comprising at least one epoxy resin as a component [F] in an amount of 10 parts by mass or more and 50 parts by mass or less with respect to 100 parts by mass of the total epoxy resin, the at least one epoxy resin selected from the group consisting of dicyclopentadiene type epoxy resins, biphenyl type epoxy resins, and biphenyl aralkyl type epoxy resins.

7. The epoxy resin composition according to claim 1 or 3, comprising a core-shell type rubber particle as a component [G] in an amount of 1 part by mass or more and 10 parts by mass or less with respect to 100 parts by mass of the total epoxy resin.

8. The epoxy resin composition according to any one of claims 1 to 3, having a value (Mh/Me) of 0.9 or more and 1.2 or less, the value (Mh/Me) obtained by dividing Mh representing a sum of moles of active hydrogen contained in the component [B] and the component [C] or [D] by Me representing a sum of moles of active epoxy groups contained in the total epoxy resin.

9. A cured resin obtained by thermally curing the epoxy resin composition according to claim 1 or 5.

10. A fiber-reinforced composite material comprising the cured resin according to claim 9 and a reinforcing-fiber base material.

11. The fiber-reinforced composite material according to claim 10, wherein the reinforcing-fiber base material is a carbon fiber base material.

12. A method for producing a fiber-reinforced composite material, the method comprising:
injecting the epoxy resin composition according to claim 1 or 5 into a reinforcing-fiber base material disposed in a mold heated to 70°C or more and 190°C or less;
impregnating the epoxy resin composition into the reinforcing-fiber base material; and
curing the epoxy resin composition in the mold.

13. The method for producing a fiber-reinforced composite material according to claim 12, wherein the reinforcing-fiber base material is a carbon fiber base material.
